# EUROPÄISCHE PATENTANMELDUNG

(11) **EP 4 745 385 A1**
(43) Veröffentlichungstag der Anmeldung: **20.05.2026**
(21) Anmeldenummer: 25214024.9
(22) Anmeldetag: 06.11.2025
(51) Int. Cl.: F02D 19/08, F02D 41/00, F02D 41/14, F02D 41/24

(54) **VERFAHREN UND VORRICHTUNG ZUM AUSFÜHREN WENIGSTENS EINER FAHRZEUGFUNKTION EINES FAHRZEUGS UND VERFAHREN UND VORRICHTUNG ZUR ERZEUGUNG EINES TRAINIERTEN ABGASERMITTLUNGSMODELLS MASCHINELLEN LERNENS**

(30) Priorität: 15.11.2024 DE 102024210991
(71) Anmelder: Volkswagen Aktiengesellschaft, 38440 Wolfsburg (DE)
(72) Erfinder: Schüttenhelm, Max, 38440 Wolfsburg (DE); Michels, Karsten, 38440 Wolfsburg (DE); Garbe, Thomas, 38440 Wolfsburg (DE)

(57) **Zusammenfassung**

Verfahren zum Ausführen wenigstens einer Fahrzeugfunktion eines Fahrzeugs (1) in Abhängigkeit von einem zu verbrennenden Kraftstoffgemisch umfassend die Schritte:
- Ermitteln von Kraftstoffgemischdaten (42) in Bezug auf den zu verbrennenden Kraftstoff, wobei die ermittelten Kraftstoffgemischdaten (42) für wenigstens eine Eigenschaft des zu verbrennenden Kraftstoffgemischs charakteristisch sind;
- Ermitteln wenigstens einer Fahrzeuggröße (46) zur Ausführung der wenigstens einen Fahrzeugfunktion auf Grundlage der ermittelten Kraftstoffgemischdaten (42) unter Verwendung eines trainierten Abgasermittlungsmodells maschinellen Lernens (32), wobei das trainierte Abgasermittlungsmodell maschinellen Lernens (32) unter Verwendung der ermittelten Kraftstoffgemischdaten (42) als Eingangsgröße wenigstens eine Verbrennungsgröße (44) als Ausgangsgröße erzeugt, wobei die Verbrennungsgröße charakteristisch für wenigstens eine Verbrennungseigenschaft des zu verbrennenden Kraftstoffgemisch ist;
- Ausführen der wenigstens einen Fahrzeugfunktion auf Grundlage der ermittelten Fahrzeuggröße (46).

## Beschreibung

Die vorliegende Erfindung bezieht sich auf ein Verfahren sowie eine Vorrichtung zum Ausführen wenigstens einer Fahrzeugfunktion eines Fahrzeug in Abhängigkeit von einem zu verbrennenden Kraftstoffgemisch. Weiterhin bezieht sich die vorliegende Erfindung auf ein Verfahren und eine Vorrichtung zum Erzeugen eines trainierten Abgasermittlungsmodells maschinellen Lernens.

Die vorliegende Erfindung betrifft ein Verfahren zum Ausführen einer Fahrzeugfunktion in Abhängigkeit von einem aktuell im Tank des Fahrzeugs vorliegenden Kraftstoffgemisch, wobei insbesondere eine Antriebsbetriebsstrategie an dieses Kraftstoffgemisch angepasst wird.

Aus dem Stand der Technik ist es allgemein bekannt, dass Betriebsparameter eines Antriebsstrang eines Fahrzeugs zur Ausführung einer Fahrzeugfunktion nach der Produktion der Fahrzeuge an die üblicherweise vorkommenden Kraftstoffe angepasst werden. Hierbei können beispielsweise Betriebsparameter wie eine Verdichtung, ein Einspritzdruck oder dergleichen eingestellt werden. Solche Einstellungen werden im Regelfall während der Betriebsdauer des Fahrzeugs nicht angepasst. Bisher gibt es kommerzielle Kraftstoffe in relativ engen Normgrenzen, was deren Zusammensetzung und Eigenschaften anbelangt, sodass eine einmalige Einstellung der Betriebsparameter als ausreichend erachtet wird. Zukünftig wird sich diese Situation durch ein Angebot an regenerativen Herstellungsmöglichkeiten sowie durch synthetische Kraftstoffe jedoch ändern und ein zur Verfügung stehendes Angebot erweitern.

Aus dem Stand der Stand ist es lediglich bekannt, einen zu verbrennenden Kraftstoff mit Hilfe eines Kraftstoffsensors zu erfassen. Hierzu kann beispielsweise ein Kraftstoff klassifiziert werden und mit für diesen Kraftstoff abgespeicherten Daten verglichen werden.

Aus der US 2006/0080025 A1 ist ein adaptives Steuerungssystem für die Kraftstoffeigenschaften zur Steuerung der Leistung eines Motors, z.B. eines Verbrennungsmotors bekannt. Ein bordeigener Kraftstoffklassifizierer klassifiziert den Kraftstoff, den der Motor gerade verwendet. Auf der Grundlage der für diesen Kraftstoff gespeicherten Eigenschaften wählt das System die optimalen Motorsteuerungsparameter aus.

Aus der US 2014/0152006 A1 sind Systeme und Verfahren zur Verwaltung eines motorgetriebenen elektrischen Generators bekannt. Ein Beispielverfahren kann das Auffüllen einer Effizienzdatenbank mit Daten über den bereitgestellten Kraftstoff und die elektrische Ausgangsleistung des motorbetriebenen Stromgenerators umfassen. Das Verfahren kann auch den Empfang einer gewünschten elektrischen Ausgangsleistung des motorgetriebenen Stromgenerators umfassen. Das Verfahren kann auch die Einstellung des dem motorgetriebenen Stromgenerator zugeführten Kraftstoffs umfassen, um die gewünschte elektrische Ausgangsleistung unter Verwendung der Wirkungsgraddatenbank zu erzeugen.

Aus der DE 10 2022 133 236 ist ein Kalibrierungssystem zum Kalibrieren einer Verbrennungskraftmaschine in Abhängigkeit von einem getankten Kraftstoff bekannt, wobei das Kalibrierungssystem ein Steuergerät zum Steuern der Verbrennungskraftmaschine, ein externes Rechnersystem mit einem künstliche Intelligenz-Modul (Kl-Modul) und einen Empfänger zum Empfangen von zumindest einem Wert eines Kalibrierungsparameters von dem Rechnersystem aufweist, wobei das Kl-Moduleingerichtet ist, den Wert des Kalibrierungsparameters in Abhängigkeit von einer Datenbasis des Rechnersystems und in Abhängigkeit von der Information über den getankten Kraftstoff zu berechnen, wobei die Datenbasis in Abhängigkeit von während eines Betreibens einer weiteren Verbrennungskraftmaschine mit unterschiedlichen Kraftstoffen erfassten Einstellungswerten eines weiteren Steuergerätes zum Steuern der weiteren Verbrennungskraftmaschine und/oder in Abhängigkeit von mithilfe von Simulationen unterschiedlicher Betriebsarten der Verbrennungskraftmaschine mit jeweils unterschiedlichen Kraftstoffen gewonnenen Simulationsdaten erstellt ist, und das Steuergerät in Abhängigkeit von dem Wert des Kalibrierungsparameters einstellbar ist.

Aus dem Stand der Technik ist allerdings kein Verfahren bekannt, welche eine flexible Anpassung der Betriebsparameter zur Ausführung einer Fahrzeugfunktion in Abhängigkeit von einen aktuellen, im Tank befindlichen Kraftstoff ermöglicht und insbesondere keine Anpassung einer Betriebsstrategie im laufenden Betrieb des Fahrzeugs ermöglicht.

Für einen zukünftigen Einsatz von regenerativen Kraftstoffen oder synthetischen Kraftstoffen besteht der Bedarf nach einem Verfahren zum Ausführen wenigstens einer Fahrzeugfunktion eines Fahrzeugs in Abhängigkeit eines aktuell im Tank des Fahrzeug vorliegendes Kraftstoffgemischs.

Der vorliegenden Erfindung liegt die daher Aufgabe zugrunde, die aus dem Stand der Technik bekannten Nachteile zu überwinden und ein Verfahren sowie eine Vorrichtung zum Ausführen wenigstens einer Fahrzeugfunktion in Abhängigkeit von einem zu verbrennenden Kraftstoffgemisch sowie ein Verfahren und eine Vorrichtung zur Erzeugung eines trainierten Abgasermittlungsmodells maschinellen Lernens bereitzustellen.

Die Aufgabe wird erfindungsgemäß durch die Gegenstände der unabhängigen Ansprüche gelöst. Vorteilhafte Ausführungsformen und Weiterbildungen der Erfindung sind Gegenstand der Unteransprüche.

Bei einem erfindungsgemäßen Verfahren zum Ausführen wenigstens einer Fahrzeugfunktion eines Fahrzeugs in Abhängigkeit von einem zu verbrennenden insbesondere durch einen Tankvorgang entstehendes Kraftstoffgemisch werden in einem Schritt Kraftstoffgemischdaten in Bezug auf das zu verbrennende Kraftstoffgemisch ermittelt, wobei die ermittelten Kraftstoffgemischdaten für wenigstens eine Eigenschaft des zu verbrennenden Kraftstoffgemischs charakteristisch sind. Bevorzugt handelt es sich dem zu verbrennenden Kraftstoffgemisch um ein Kraftstoffgemisch, welches in einem Tank des Fahrzeug vorliegt und zum Antreiben des Fahrzeugs (in einem Verbrennungsmotor) verbrannt werden soll. Bevorzugt handelt es sich bei dem Kraftstoffgemisch um ein Kraftstoffgemisch, welches durch einen Tankvorgang erhalten wurde.

In einem weiteren Schritt des erfindungsgemäßen Verfahrens wird wenigstens eine Fahrzeuggröße zum Ausführen der wenigstens einen Fahrzeugfunktion auf Grundlage der ermittelten Kraftstoffgemischdaten unter Verwendung eines trainierten Abgasermittlungsmodells maschinellen Lernens ermittelt, wobei das trainierte Abgasermittlungsmodell maschinellen Lernens unter Verwendung der ermittelten Kraftstoffgemischdaten als Eingangsgröße wenigstens eine Verbrennungsgröße als Ausgangsgröße erzeugt, wobei die Verbrennungsgröße charakteristisch für wenigstens eine Verbrennungseigenschaft des zu verbrennenden Kraftstoffgemisch ist. Bevorzugt wird die wenigstens eine Fahrzeuggröße auf Grundlage wenigstens einer Verbrennungsgröße ermittelt. In einem weiteren Schritt des erfindungsgemäßen Verfahrens wird die wenigstens eine Fahrzeugfunktion auf Grundlage der ermittelten Fahrzeuggröße ausgeführt. Bevorzugt handelt es sich bei der Fahrzeugfunktion um einen Antriebfunktion des Fahrzeugs und die Fahrzeuggröße ist charakteristisch für eine Einstellungsgröße bzw. einen Betriebsparameter des Antriebsstrangs des Fahrzeugs. Bevorzugt wird für ein aktuell vorliegendes Kraftstoffgemisch wenigstens eine Einstellungsgröße des Antriebsstrangs angepasst, es erfolgt demnach eine Anpassung der Antriebsbetriebsstrategie.

Mit anderen Worten werden Kraftstoffgemischdaten in den Bezug auf das im Tank des Fahrzeugs befindlichen zu verbrennenden Kraftstoffgemisch ermittelt und auf Grundlage dieser Daten eine Fahrzeuggröße ermittelt, welche dazu dient, wenigstens eine Fahrzeugfunktion des Fahrzeugs auszuführen, wobei bevorzugt ein Betriebsparameter des Antriebsstrangs an das aktuelle Kraftstoffgemisch angepasst wird. Mit anderen Worten wird eine Einstellunggröße des Fahrzeugs zum Ausführen der Fahrzeugfunktion, beispielsweise des Antriebs des Fahrzeugs durch Verbrennung des Kraftstoffgemischs, an das aktuell vorliegende Kraftstoffgemisch angepasst. Das vorgeschlagene Verfahren kann für alle Fahrzeuge verwendet werden, welche eine Verbrennungsmotor aufweisen. Mit anderen Worten kann das vorgeschlagene Verfahren verwendet werden bei Fahrzeugen mit einem klassischen Verbrennungsmotor sowie für Hybridfahrzeuge (MHEV (mild hybrid electric vehicle) und PHEV(Plug-in hybrid electric vehicle)).

Bei einem vorteilhaften Verfahren umfasst das zu verbrennende Kraftstoffgemisch wenigstens einen ersten Kraftstoff und einen zweite Kraftstoff, wobei es sich bevorzugt bei dem ersten Kraftstoff um einen (vor dem Tankvorgang) im Tank des Fahrzeugs befindlichen Kraftstoff handelt und wobei es sich bevorzugt bei dem zweiten Kraftstoff um einen getankten Kraftstoff handelt, welcher bevorzugt bei einem insbesondere zeitlich nachfolgenden Tankvorgang mit dem ersten Kraftstoff vermischt wird. Mit anderen Worten wird das zu verbrennende Kraftstoffgemisch gebildet aus einem im Tank verbliebenen Restkraftstoff (vor dem Tanken) gemischt mit einem getankten Kraftstoff. Bevorzugt findet das erfindungsgemäße Verfahren Anwendung bei und insbesondere unmittelbar nach einem und bevorzugt jedem Tankvorgang. Mit anderen Worten wird bevorzugt nach jedem Tankvorgang eine Fahrzeuggröße ermittelt und die Fahrzeugfunktion (angepasst) auf Grundlage dieser Fahrzeuggröße ausgeführt.

Bei einem bevorzugten Verfahren handelt es sich bei dem ersten und/oder zweiten Kraftstoff und/oder dem Kraftstoffgemisch um einen Ottokraftstoff, insbesondere um Benzin. Das im Rahmen der vorliegenden Erfindung beschriebene Verfahren ist auch für Diesel als Kraftstoff anwendbar mit den entsprechenden Anpassungen.

Bei einem bevorzugten Verfahren werden die Kraftstoffgemischdaten in Bezug auf das zu verbrennende Kraftstoffgemisch ermittelt. Bevorzugt kann in diesem Zusammenhang unter einem Ermitteln ein Erfassen (z.B. mit einer Erfassungseinrichtung bzw. Kraftstofferkennungseinrichtung) oder ein Abrufen von Daten oder ein Ermitteln anhand computergestützter bzw. computerimplementierter Methoden verstanden werden. Bevorzugt werden die Kraftstoffgemischdaten auf Grundlage von ersten Kraftstoffdaten und zweiten Kraftstoffdaten ermittelt. Bei einem bevorzugten Verfahren werden (zur Ermittlung der Kraftstoffgemischdaten in Bezug auf das zu verbrennende Kraftstoffgemisch) erste Kraftstoffdaten und zweite Kraftstoffdaten ermittelt und/oder abgerufen und/oder erfasst.

Bei einem vorteilhaften Verfahren werden erste Kraftstoffdaten und zweite Kraftstoffdaten ermittelt, wobei die ersten Kraftstoffdaten für wenigstens eine Eigenschaft des ersten Kraftstoffs charakteristisch sind und die zweiten Kraftstoffdaten für wenigstens eine Eigenschaft des zweiten Kraftstoffs charakteristisch sind. Bei einem vorteilhaften Verfahren erfolgt die Ermittlung der Kraftstoffgemischdaten auf Grundlage der ersten Kraftstoffdaten und zweiten Kraftstoffdaten.

Bevorzugt handelt es sich bei der wenigstens einen Eigenschaft des ersten Kraftstoffs und/oder des zweiten Kraftstoffs und/oder des Kraftstoffgemischs um eine Zusammensetzung des ersten Kraftstoffs und/oder des zweiten Kraftstoffs und/oder des Kraftstoffgemischs und/oder um eine Kraftstoffgröße (physikochemische Größe) des ersten Kraftstoffs und/oder des zweiten Kraftstoffs und/oder des Kraftstoffgemischs und/oder um ein Volumen bzw. eine Masse des ersten Kraftstoffs und/oder des zweiten Kraftstoffs und/oder des Kraftstoffgemischs.

Bevorzugt sind die ersten Kraftstoffdaten charakteristisch für den ersten Kraftstoff und insbesondere für eine Zusammensetzung des ersten Kraftstoffs und/oder für ein Volumen bzw. eine Menge des ersten Kraftstoffs und/oder eine Masse des ersten Kraftstoffs und/oder für einen Volumenanteil und/oder Massenanteil des ersten Kraftstoffs an dem zu verbrennenden Kraftstoffgemisch. Bevorzugt sind die zweiten Kraftstoffdaten charakteristisch für den zweiten Kraftstoff und insbesondere für eine Zusammensetzung des zweiten Kraftstoff und/oder für ein Volumen bzw. eine Menge des zweiten Kraftstoffs und/oder für eine Masse des zweiten Kraftstoffs und/oder für einen Volumenanteil und/oder Massenanteil des zweiten Kraftstoffs am zu verbrennenden Kraftstoffgemisch.

Bei einem vorteilhaften Verfahren umfassen die ersten und zweiten Kraftstoffdaten jeweils wenigstens eine und bevorzugt eine Vielzahl von Analysegrößen und den Analysegrößen zugeordnete Anteilsgrößen umfassen Bei einem bevorzugten Verfahren umfassen die ersten und/oder zweiten Kraftstoffdaten wenigstens eine und bevorzugt eine Vielzahl von Kraftstoffgrößen. Bei einem bevorzugten Verfahren umfassen die ersten und/oder zweiten Kraftstoffdaten eine Mengengröße bzw. eine Volumengröße, wobei die Mengen- bzw. Volumengröße hierbei charakteristisch für eine Menge bzw. Volumen des ersten und/oder zweiten Kraftstoffs ist. Bevorzugt ist die Mengen- bzw. Volumengröße charakteristisch für einen Anteil des ersten und/oder zweiten Kraftstoffs an der Gesamtmenge bzw. an dem Gesamtvolumen des zu verbrennenden Kraftstoffgemischs. Bevorzugt umfassen die ersten Kraftstoffdaten und/oder die zweiten Kraft bevorzugt jeweils eine Massengröße, wobei die Massegröße charakteristisch für einen Massenanteil des ersten und/oder zweiten Kraftstoffs an dem Kraftstoffgemisch ist.

Bei einem bevorzugten Verfahren umfasst der erste Kraftstoff und/oder der zweite Kraftstoff und/oder das zu verbrennende Kraftstoffgemisch jeweils bevorzugt mehr als eine Verbindung, Komponente oder Bestandteil und bevorzugt eine Vielzahl unterschiedlicher Verbindungen, Komponenten oder Bestandteile. Bevorzugt ist die Analysegröße charakteristisch für eine Gruppe von Verbindungen aus dem ersten Kraftstoff und/oder dem zweiten Kraftstoff und/oder dem zu verbrennenden Kraftstoffgemisch, welche wenigstens eine vorgegebene Funktionalität aufweisen. Bevorzugt ist die Anteilsgröße charakteristisch für einen Mengenanteil der in dem jeweiligen Kraftstoff befindlichen Verbindungen, welche in der durch die Analysegröße charakteristische Gruppe gruppiert sind.

Bevorzugt bezieht sich hierbei die Analysegröße und die ihr zugeordnete Anteilsgröße auf eine (vorgegebene und/oder vorgebbare) Komponente des Kraftstoffgemischs bzw. des ersten oder zweiten Kraftstoffs, beispielsweise eine vorgegebene Gruppe von Verbindungen in dem jeweiligen Kraftstoff. Es wäre auch denkbar, dass sich die Analysegröße auf eine konkrete chemische Verbindung bezieht und die zugeordnete Anteilsgröße auf den Anteil dieser konkreten chemischen Verbindung in dem jeweiligen Kraftstoff.

Die Analysegröße gibt dabei die Art der (vorgegebenen und/oder vorgebbaren) Komponente an, sie identifiziert also die Art der Komponente. Mit anderen Worten dient die Analysegröße als Identifikator für eine Komponente des Kraftstoff.

Die Anteilsgröße ist insbesondere charakteristisch für einen Anteil der durch die Analysegröße festgelegten bzw. charakterisierten bzw. identifizierten Komponente in dem jeweiligen Kraftstoff. Mit anderen Worten stellt die Anteilsgröße ein Maß für den Anteil der durch die Analysegröße identifizierten bzw. charakterisierten Komponente (etwa eine vorgegebene Gruppe von Verbindungen) in dem jeweiligen Kraftstoff dar. Bevorzugt ist die Anteilsgröße charakteristisch für einen volumetrischen Anteil (etwa bei einer vorgegebenen und/oder vorgebbaren Temperatur wie beispielsweise bei 15°C und/oder Druck und/oder anderer Parameter). Denkbar ist aber auch, dass die Anteilsgröße charakteristisch ist für einen mengenmäßiger Anteil und/oder einen Massenanteil.

Bevorzugt umfassen die jeweiligen Kraftstoffdaten bzw. Kraftstoffgemischdaten (zu dem jeweiligen Kraftstoff bzw. zu dem jeweiligen Kraftstoffgemisch) eine Vielzahl von (insbesondere paarweise verschiedenen) Analysegrößen und den Analysegrößen jeweils zugeordneten Anteilsgrößen. Dabei ist bevorzugt jeder Analysegröße genau eine Anteilsgröße zugeordnet. Bei den Analysegrößen handelt es sich dabei bevorzugt um jeweils obig beschriebene Analysegrößen, welche sich auf besonders bevorzugt jeweils, insbesondere paarweise, verschiedene Komponenten (etwa die vorgegebene Gruppe von Verbindungen) beziehen.

Dabei ist die Analysegröße jeweils charakteristisch für eine Gruppe von Verbindungen, (bevorzugt Kohlenwasserstoffverbindungen und/oder sauerstoffhaltige Verbindungen), welche wenigstens eine vorgegebene Funktionalität und/oder eine vorgegebene Kohlenstoffzahl (bzw. mehrere vorgegebene Kohlenstoffzahlen) aufweisen. Mit anderen Worten ist es durch Angabe der Analysegröße möglich, die bzw. bevorzugt alle Verbindungen mit wenigstens einer vorgegebenen Funktionalität (welche insbesondere etwa üblicherweise oder grundsätzlich in Kraftstoffen auftreten können) zu identifizieren bzw. zu spezifizieren. Bevorzugt umfassen die Kraftstoffgemischdaten bzw. die ersten und/oder zweiten Kraftstoffdaten jeweils Informationen zu den Kohlenwasserstoffen bzw. Kohlenwasserstoffgruppen und/oder zu Oxygenaten (bzw. sauerstoffhaltigen Verbindungen) in dem jeweiligen Kraftstoff bzw. Kraftstoffgemisch.

Beispielsweise könnte die Analysegröße charakteristisch sein für eine Gruppe von Kohlenwasserstoffen, welche (insbesondere etwa alle in einem Kraftstoff auftretenden) Kohlenwasserstoffe mit einer Aromaten-Funktionalität und Kohlenwasserstoffe mit einer Olefin(cyclisch)-Funktionalität umfasst.

Dabei ist die Anteilsgröße charakteristisch für einen Mengenanteil der in dem Kraftstoffgemisch bzw. Kraftstoff befindlichen Verbindungen, welche in der durch die Analysegröße charakterisierten (bzw. identifizierten bzw. identifizierbaren) Gruppe gruppiert sind. Der Mengenanteil bezieht sich dabei bevorzugt auf ein Mengenverhältnis (insbesondere ein volumetrisches Verhältnis und/oder ein Massenverhältnis) der in einer vorgegebenen Gesamtmenge des jeweiligen Kraftstoffs bzw. Kraftstoffgemischs befindlichen, in der durch die Analysegröße charakterisierte Gruppe gruppierten Verbindungen zur Gesamtmenge des jeweiligen Kraftstoffs. Insbesondere sind die jeweiligen Kraftstoffdaten bzw. die Kraftstoffgemischdaten (bevorzugt durch die Werte der Anteilsgrößen, welche den jeweiligen Analysegrößen zugeordnet sind) jeweils charakteristisch für die Zusammensetzung des jeweiligen Kraftstoff bzw. Kraftstoffgemischs.

Bei einem bevorzugten Verfahren umfassen die ersten Kraftstoffdaten und/oder die zweiten Kraftstoffdaten und/oder die Kraftstoffgemischdaten wenigstens eine Kraftstoffgröße, welche charakteristisch für wenigstens eine Kraftstoffeigenschaft ist, wobei die wenigstens einen Kraftstoffeigenschaft bevorzugt ausgewählt ist aus einer Gruppe von Kraftstoffeigenschaften, welche eine Zündwilligkeit, einen Energiegehalt, eine Dichte, ein Dampfdruck, ein Siedeverhalten, eine Viskosität, eine Klopffestigkeit, eine Cetanzahl (CN), charakteristische Werte wie Punkte einer Destillationskurve, ein Yield Sooting Index (YSI), eine Research-Oktanzahl (ROZ, engl. RON für "Research Octane Number"), eine Motor-Oktanzahl (MOZ, engl. MON für "Motor Octane Number"), eine Front-Oktanzahl (FOZ), eine Straßen-Oktanzahl (SOZ) und dergleichen sowie Kombinationen hiervon umfasst. Insbesondere ist der Yield Sooting Index (YSI), insbesondere der insbesondere Rußausbeute-Index, charakteristisch für eine Menge an Ruß, die von einem Brennstoff gebildet wird, wenn er in niedriger Konzentration in eine Methan-Luft-Grundflamme eingedüst wird.

Bevorzugt werden die ersten und/oder zweiten Kraftstoffdaten aus einer Reformulyzeranalyse und/oder einer spektroskopischen Analyse erhalten. Bei einem weiter bevorzugten Verfahren werden und/oder wurden bzw. sind die ermittelten und/oder die zu ermittelnden ersten und/oder zweiten Kraftstoffdaten jeweils mittels eines, insbesondere multidimensionalen, gaschromatographischen (experimentellen) Messverfahrens zur Bestimmung der Kohlenwasserstoffgruppen und/oder der sauerstoffhaltigen Verbindungen des jeweiligen Kraftstoffs erzeugt.

Bevorzugt wird hierfür das in der DIN EN ISO 22854 normierte bzw. standardisierte Verfahren zur Bestimmung der Kohlenwasserstoffgruppen und der sauerstoffhaltigen Verbindungen in Ottokraftstoffen und in Ethanolkraftstoff (E85) (Multidimensionales gaschromatographisches Verfahren ISO/DIS 22854:2020) verwendet. In Hinsicht auf eine Offenbarung dieses Messverfahrens gemäß der DIN EN ISO 22854 (insbesondere zur Ermittlung und/oder Erfassung der ersten und/oder zweiten Kraftstoffdaten und/oder Ermittlung wenigstens einer Anteilsgröße und bevorzugt aller Anteilsgrößen) wird Bezug genommen auf die ISO/DIS 22854:2020, deren Inhalt hiermit in diese Anmeldung aufgenommen wird.

Bevorzugt soll die Ermittlung der Kraftstoffeigenschaften bzw. die Ermittlung der Daten in Bezug auf die wenigstens eine Kraftstoffeigenschaft auf Grundlage der in ISO 22854 ermittelten Daten (für die ersten und/oder zweiten Kraftstoffdaten bzw. die Kraftstoffgemischdaten der jeweiligen Kraftstoffe) erfolgen. Die Besonderheit ist die Einteilung der Kraftstoffkomponenten in funktionale Gruppen und die Unterteilung dieser nach Anzahl der Kohlenstoffatome bzw. die exakte Benennung der relevanten Oxygenate.

Bei einem weiter bevorzugten Verfahren ist die Analysegröße charakteristisch für eine Gruppe von Kohlenwasserstoffen. Dabei ist bevorzugt die wenigstens eine vorgegebene Funktionalität ausgewählt (bzw. die mehreren vorgegebenen Funktionalitäten sind ausgewählt) aus einer Gruppe, die eine Paraffin(n-/-iso)-Funktionalität, eine Naphthen-Funktionalität; eine Olefine(n-/- iso)-Funktionalität, eine Olefin(cyclisch)-Funktionalität und/oder eine Aromaten-Funktionalität umfasst. Dabei ist die Gruppe von Kohlenwasserstoffen mit mehreren vorgegebenen Funktionalitäten insbesondere so zu verstehen, dass von dieser Gruppe alle Kohlenwasserstoffe umfasst sind, die jedenfalls eine der mehreren vorgegebenen Funktionalitäten aufweisen.

Mit anderen Worten weisen bevorzugt die ersten und/oder zweiten Kraftstoffdaten und/oder Kraftstoffgemischdaten Informationen (insbesondere deren (insbesondere Volumen-)Anteil im Kraftstoff) der Kohlenwasserstoffe in Bezug auf eine Funktionalität der Kohlenwasserstoffe auf, wobei die wenigstens eine vorgegebene Funktionalität bevorzugt ausgewählt ist aus einer Gruppe, die eine Paraffin(n-/-iso)-Funktionalität, eine Naphthen-Funktionalität; eine Olefine(n-/- iso)-Funktionalität, eine Olefin(cyclisch)-Funktionalität und/oder eine Aromaten-Funktionalität umfasst.

Bei einem weiter bevorzugten Verfahren ist die Analysegröße charakteristisch für eine Gruppe von Oxygenaten, wobei die wenigstens eine Funktionalität eine Ether-Funktionalität und/oder eine Alkohol-Funktionalität ist und/oder wobei die Analysegröße charakteristisch ist für einen Aufbau der Kohlenstoffkette und/oder wenigstens und bevorzugt genau eine Art eines Alkohols.

Bevorzugt ist (insbesondere genau) eine Analysegröße charakteristisch für eine Gruppe von Oxygenaten mit einer Ether-Funktionalität. Zusätzlich oder alternativ ist bevorzugt (insbesondere genau) eine Analysegröße charakteristisch für eine Gruppe von Oxygenaten mit einer Alkohol-Funktionalität.

Bei einem weiter bevorzugten Verfahren ist wenigstens eine und bevorzugt die Analysegröße (besonders bevorzugt sind mehrere Analysegrößen jeweils) charakteristisch für eine Gruppe von Verbindungen, insbesondere Kohlenwasserstoffverbindungen, welche eine vorgegebene Kohlenstoffzahl aufweisen. Insbesondere werden bevorzugt innerhalb einer Funktionalität zwei oder mehr Kohlenstoffzahlen zusammengezogen (zu einer gemeinsamen Gruppe von Verbindungen, für welche die Analysegröße charakteristisch ist), vorzugsweise aufeinander folgende, wie beispielsweise Paraffin C₃ + C₄. Dies bietet den Vorteil, dass die Anzahl der Datensätze im Analysedatensatz sinkt.

Bevorzugt stellt jede Kombination aus Funktionalität und Kohlenstoffzahl (C-Anzahl) (bzw. mehrere vorgegebene Kohlenstoffzahlen) eine eigene Analysegröße bzw. einen eigenen Identifikator dar, gemeinsam ergeben sie bevorzugt mit ihren jeweiligen Anteilen (bzw. Anteilsgrößen) den Analysendatensatz. Bevorzugt wird jedem Identifikator sein Anteil am Gemisch zugeordnet (insbesondere über die Anteilsgröße).

Bevorzugt weisen die ersten und/oder zweiten Kraftstoffdaten und/oder Kraftstoffgemischdaten höchstens zwanzig, bevorzugt höchstens 15, bevorzugt höchstens 13 (paarweise verschiedene) Analysegrößen für Oxygenate auf. Bevorzugt weisen die ersten und/oder zweiten Kraftstoffdaten und/oder Kraftstoffgemischdaten höchstens 15, bevorzugt höchstens zehn, bevorzugt höchstens neun verschiedene Analysegrößen und besonders bevorzugt genau eine Analysegröße für Alkohole auf. Bevorzugt weisen die ersten und/oder zweiten Kraftstoffdaten und/oder Kraftstoffgemischdaten höchstens fünf, bevorzugt höchstens vier (paarweise verschiedene) Analysegrößen und besonders bevorzugt genau eine Analysegröße für Ether auf.

Bevorzugt weisen die ersten und/oder zweiten Kraftstoffdaten und/oder Kraftstoffgemischdaten höchstens 15, bevorzugt höchstens 9, besonders bevorzugt höchstens 6 verschiedene Analysegrößen für Paraffine (n-/-iso) auf. Bevorzugt weisen die ersten und/oder zweiten Kraftstoffdaten und/oder Kraftstoffgemischdaten höchstens 6, bevorzugt genau eine Analysegröße(n) für Naphthene auf. Bevorzugt weisen die ersten und/oder zweiten Kraftstoffdaten und/oder Kraftstoffgemischdaten höchstens 8, bevorzugt maximal 7, bevorzugt maximal, bevorzugt genau 5 verschiedene Analysegrößen für Olefine (n-/iso) auf. Bevorzugt weisen die ersten und/oder zweiten Kraftstoffdaten und/oder Kraftstoffgemischdaten höchstens und besonders bevorzugt genau 6 verschiedene Analysegrößen für Olefine(cyclisch) auf. Bevorzugt weisen die ersten und/oder zweiten Kraftstoffdaten und/oder Kraftstoffgemischdaten höchstens und besonders bevorzugt genau 6 verschiedene Analysegrößen für Aromaten auf.

Die vorgenannten maximalen Anzahlen für die jeweiligen Analysegrößen bieten jeweils (einzeln oder in Kombination) den Vorteil, dass zum einen typische Daten, welche bei der Herstellung der Kraftstoffe üblicherweise bestimmt werden, verwendet werden können und keine weiteren Messdaten zur Ermittlung der ersten und/oder zweiten Kraftstoffdaten erzeugt bzw. bestimmt werden müssen und gleichzeitig eine möglichst weitgehende Reduktion der Datensätze der ersten und/oder zweiten Kraftstoffdaten und/oder Kraftstoffgemischdaten vorgenommen werden kann.

Bevorzugt weisen die ersten und/oder zweiten Kraftstoffdaten und/oder Kraftstoffgemischdaten eine (Analysegröße sowie eine dieser Analysegröße zugeordnete) Anteilsgröße auf, die charakteristisch ist für (alle) Paraffine mit den Kohlenstoffzahlen 6 oder 7. Diese Formulierung ist hier (und entsprechend analog bei analogen nachfolgend verwendeten Formulierungen zu weiteren Funktionalitäten/Kohlenstoffzahlen) insbesondere so zu verstehen, dass für die Paraffine mit Kohlenstoffzahl 6 und für die Paraffine mit Kohlenstoffzahl 7 in den ersten und/oder zweiten Kraftstoffdaten und/oder Kraftstoffgemischdaten (lediglich) eine gemeinsame Analysegröße vorgesehen ist. Die ersten und/oder zweiten Kraftstoffdaten und/oder Kraftstoffgemischdaten weisen also insbesondere keine (eigene) Analysegröße (und dieser zugeordnete Anteilsgröße) auf, die charakteristisch ist für Paraffine mit nur der Kohlenstoffzahl 6. Weiterhin weisen die ersten und/oder zweiten Kraftstoffdaten und/oder Kraftstoffgemischdaten insbesondere auch keine (eigene) Analysegröße (und dieser zugeordnete Anteilsgröße) auf, die charakteristisch ist für Paraffine mit nur der Kohlenstoffzahl 7. Insbesondere kann also auf Grundlage (nur) der ersten und/oder zweiten Kraftstoffdaten und/oder Kraftstoffgemischdaten nicht zwischen den Paraffinen mit Kohlenstoffzahl 6 und den Paraffinen mit Kohlenstoffzahl 7 unterschieden werden (etwa deren Anteilsgröße).

Zusätzlich oder alternativ weisen bevorzugt die ersten und/oder zweiten Kraftstoffdaten und/oder Kraftstoffgemischdaten eine (Analysegröße sowie eine dieser Analysegröße zugeordnete) Anteilsgröße auf, die charakteristisch ist für (alle) Paraffine mit den Kohlenstoffzahlen 8, 9 oder 10. Zusätzlich oder alternativ weisen bevorzugt die ersten und/oder zweiten Kraftstoffdaten und/oder Kraftstoffgemischdaten eine (Analysegröße sowie eine dieser Analysegröße zugeordnete) Anteilsgröße auf, die charakteristisch ist für (alle) Paraffine mit Kohlenstoffzahlen von mindestens 11 Kohlenstoffatomen. Zusätzlich oder alternativ weisen bevorzugt die ersten und/oder zweiten Kraftstoffdaten und/oder Kraftstoffgemischdaten jeweils eine separate (Analysegröße sowie eine dieser Analysegröße zugeordnete) Anteilsgröße für die jeweiligen einzelnen Kohlenstoffzahlen 3, 4 und 5 auf.

Zusätzlich oder alternativ weisen bevorzugt die ersten und/oder zweiten Kraftstoffdaten und/oder Kraftstoffgemischdaten eine (Analysegröße sowie eine dieser Analysegröße zugeordnete) Anteilsgröße für Naphthene mit Kohlenstoffzahlen zwischen 5 - 10 auf, so dass vorteilhaft alle Kohlenstoffzahlen zusammengezogen sind.

Zusätzlich oder alternativ weisen bevorzugt die ersten und/oder zweiten Kraftstoffdaten und/oder Kraftstoffgemischdaten eine (Analysegröße sowie eine dieser Analysegröße zugeordnete) Anteilsgröße für Olefine (n-/iso) mit den Kohlenstoffzahlen 4 oder 5 auf. Zusätzlich oder alternativ weisen bevorzugt die ersten und/oder zweiten Kraftstoffdaten und/oder Kraftstoffgemischdaten eine (Analysegröße sowie eine dieser Analysegröße zugeordnete) Anteilsgröße für Olefine (n-/iso) mit den Kohlenstoffzahlen 7 oder 8 auf. Zusätzlich oder alternativ weisen bevorzugt die ersten und/oder zweiten Kraftstoffdaten und/oder Kraftstoffgemischdaten eine (jeweils) separate (Analysegröße sowie eine dieser Analysegröße zugeordnete) Anteilsgröße für Olefine (n-/iso) mit den jeweiligen einzelnen Kohlenstoffzahlen 3 und 6 auf.

Durch die weitere Aggregation der Daten, beispielsweise durch das hierdurch beschriebene Zusammenziehen von Cₙ und Cₙ₊₁ (innerhalb einer Funktionalität Zusammenziehen von Verbindungen mit aufeinanderfolgenden Kohlenstoffzahlen) zu einer neuen (gemeinsamen) Gruppe (welche durch eine einzige Analysegröße charakterisiert wird), wird vorteilhaft eine weitere Reduktion des Datenaufwands erreicht.

Bevorzugt werden alle Olefine(cyclisch) zu einer gemeinsamen Gruppe zusammengezogen, welche durch genau eine Analysegröße charakterisiert ist. Bevorzugt wird in den ersten und/oder zweiten Kraftstoffdaten und/oder Kraftstoffgemischdaten nicht im Rahmen der Analysegrößen (und der zugeordneten Anteilsgrößen) zwischen Olefinen(cyclisch) mit verschiedenen Kohlenstoffzahlen unterschieden.

Zusätzlich oder alternativ werden bevorzugt innerhalb der Olefine(cyclisch) und/oder der Aromaten keine Kohlenstoffzahlen zusammengezogen (zu einer gemeinsamen Gruppe, welche durch eine einzige Analysegröße charakterisiert ist). Denkbar ist dabei, dass die ersten und/oder zweiten Kraftstoffdaten und/oder Kraftstoffgemischdaten keine Analysegröße(n) aufweisen, welche für Olefine(cyclisch) und/oder für Aromaten charakteristisch sind, so dass der Datensatz weiter reduziert werden kann. Es wurde festgestellt, dass diese Verbindungen die Kraftstoffeigenschaften nur geringfügig beeinflussen.

Es wäre auch denkbar, dass die Analysegröße und bevorzugt die ihr zugeordnete Anteilsgröße charakteristisch für eine einzige chemische Verbindung ist. Mit anderen Worten können die ersten und/oder zweiten Kraftstoffdaten und/oder Kraftstoffgemischdaten für jede in dem Kraftstoff bzw. Kraftstoffgemisch vorkommende chemische Verbindung eine eigene Analysegröße und eine jeweils zugeordnete Anteilsgröße beinhalten. In diese Fall beinhalten die Analysedatensätze zwar eine sehr viel größere Menge an Daten und die Bestimmung der Analysegrößen bzw. Anteilsgrößen gestaltet sich aufwendiger, aber dafür wird eine maximale Informationsmenge erhalten.

Bei einem bevorzugten Verfahren erfolgt die Ermittlung der Kraftstoffgemischdaten auf Grundlage der ersten Kraftstoffdaten und zweiten Kraftstoffdaten. Bevorzugt beinhalten die ersten und zweiten Kraftstoffdaten jeweils eine Vielzahl von Analysegröße und den Analysegrößen zugeordnete Anteilsgrößen. Bevorzugt umfassen die ersten und zweiten Kraftstoffdaten jeweils Daten in Bezug auf ein Volumen bzw. auf deren Volumenanteil an dem Kraftstoffgemisch. umfassen die ersten und zweiten Kraftstoffdaten jeweils Daten in Bezug auf eine Masse und bevorzugt für einen Massenanteil des ersten und/oder zweiten Kraftstoffs am Kraftstoffgemisch. Mit anderen Worten sind die ermittelten ersten und zweiten Kraftstoffdaten charakteristisch für eine Zusammensetzung der jeweiligen Kraftstoffe sowie für deren Anteil am Kraftstoffgemisch.

Bei einem bevorzugten Verfahren erfolgt die Ermittlung der Kraftstoffgemischdaten unter Anwendung eines Mischungsmodells auf Grundlage der ersten und zweiten Kraftstoffdaten. Bei einem bevorzugten Verfahren ist das Mischungsmodell bzw. eine Auswahl eines geeigneten Mischungsmodells abhängig von den (verwendeten bzw. zur Verfügung stehenden) ersten und zweiten Kraftstoffdaten. Bei einer bevorzugten Ausführungsform umfassen die ersten und zweiten Kraftstoffdaten jeweils eine Vielzahl von Analysegrößen und Anteilsgrößen und bevorzugt keine Kraftstoffgrößen. Mit anderen Worten sind bei dieser Ausführungsform die ersten und zweiten Kraftstoffdaten charakteristisch für eine Zusammensetzung des ersten und zweiten Kraftstoffs, während keine Daten in Bezug auf eine Kraftstoffeigenschaft enthalten sind (z.B. Dampfdruck, Dichte, etc.). Bevorzugt erfolgt die Ermittlung der Kraftstoffgemischdaten (in diesem Fall) unter Anwendung eines mathematischen Modells insbesondere der Kombinatorik.

Mit anderen Worten kann anhand der in den ersten und zweiten Kraftstoffdaten enthaltenen Analysegrößen, Anteilsgrößen sowie deren Volumengrößen bzw. Massengrößen (jeweiliger Anteil am Kraftstoffgemisch) einfach und direkt auf eine Zusammensetzung des (neuen) Kraftstoffgemischs geschlossen werden. Bevorzugt umfassen (in diesem Fall) die ermittelten Kraftstoffgemischdaten eine Vielzahl von Analysegrößen und Anteilsgrößen, bevorzugt aber keine Kraftstoffgrößen.

Bei einer bevorzugten (alternativen) Ausführungsform umfassen die ersten und zweiten Kraftstoffdaten zusätzlich wenigstens eine und bevorzugt eine Vielzahl von Kraftstoffgrößen (z.B. Angaben zu einem Dampfdruck, einer Oktanzahl, einer Dichte oder dergleichen). Hierbei ist es nicht möglich durch simple Kombinatorik wenigstens eine und bevorzugt eine Vielzahl von Kraftstoffgrößen für das Kraftstoffgemisch zu ermitteln. Insbesondere beeinflussen sich die einzelnen Variablen gegenseitig und es liegen keine einfachen linearen Zusammenhänge vor. Hierbei ist es erforderlich ein komplexeres Mischungsmodell anzuwenden, beispielsweise ein trainiertes Modell maschinellen Lernens. Ein solches komplexes Mischungsmodell ist beispielsweise aus der DE 10 2022 207 017 A1 der Anmelderin in Form eines trainierten Kraftstoffeigenschafts-Ermittlungsmodells bekannt ist. Auf die Offenbarung der DE 10 2022 207 017 A1 wird Bezug genommen, sodass deren Inhalt hiermit in diese Anmeldung aufgenommen wird.

Bei einem vorteilhaften Verfahren werden die ersten Kraftstoffdaten von einer nichtflüchtigen Speichereinrichtung des Fahrzeugs abgerufen. Bei einem bevorzugten Verfahren sind die ersten Kraftstoffdaten charakteristisch einen (vor dem Tanken) im Tank des Fahrzeugs befindlichen (Rest-)Kraftstoff. Bevorzugt sind die ersten Kraftstoffdaten auf der nichtflüchtigen Speichereinrichtung des Fahrzeugs abgelegt. Hierbei wäre es denkbar, dass die ersten Kraftstoffdaten unter Anwendung einer Ausführungsform des erfindungsgemäßen Verfahren im Rahmen eines vorhergehenden Tankvorgangs ermittelt wurden (in Form von Kraftstoffgemischdaten) und auf der Speichereinrichtung abgelegt wurden. Es wäre auch denkbar, dass die ersten Kraftstoffdaten im Rahmen eines allerersten Tankvorgangs, also zu dem Zeitpunkt zu dem der Tank zum ersten Mal mit einem Kraftstoff befüllt wurde, erfasst wurden und auf der Speichereinrichtung abgelegt wurden. Weiterhin wäre es auch denkbar, dass die ersten Kraftstoffdaten mit einer Kraftstofferfassungseinrichtung des Fahrzeugs erfasst werden bzw. wurden und auch der Speichereinrichtung des Fahrzeugs abgelegt wurden.

Bei einem bevorzugten Verfahren sind die ermittelten und/oder abgerufenen ersten Kraftstoffdaten charakteristisch für eine Menge des ersten Kraftstoffs im Tank des Fahrzeug. Mit anderen Worten umfassen die ersten Kraftstoffdaten Daten in Bezug auf ein Volumen und/oder eine Masse des ersten Kraftstoffs (im Tank des Fahrzeugs). Bevorzugt werden diese Daten mit Hilfe einer geeigneten Sensoreinrichtung des Fahrzeugs erfasst.

Bei einem vorteilhaften Verfahren werden die zweiten Kraftstoffdaten mittels einer Datenübertragungseinrichtung des Fahrzeugs empfangen, wobei bevorzugt die zweiten Kraftstoffdaten von einer nichtflüchtigen, externen Speichereinrichtung, insbesondere von einem externen (Backend-)Server abgerufen werden. Bei einem bevorzugten Verfahren werden die zweiten Kraftstoffdaten über eine kabellose oder über eine kabelgebundene Kommunikationsverbindung übertragen. Bei einem bevorzugten Verfahren werden die zweiten Kraftstoffdaten von einem Hersteller des zweiten Kraftstoffs oder von einem Betreiber der Tankstelle bereitgestellt. Bei einem bevorzugten Verfahren erfolgt eine Übertragung der zweiten Kraftstoffdaten durch eine Steckverbindung, insbesondere über eine Zapfsäule bzw. einen Einfüllstutzen der Zapfsäule der Tankstelle. Bei einer bevorzugten Ausführungsform erfolgt eine Übertragung der zweiten Kraftstoffdaten kabellos. Hierbei wäre es denkbar, dass die zweiten Kraftstoffdaten zwischen einer Datenübertragungseinrichtung der Tankstelle und der Datenübertragungseinrichtung des Fahrzeugs bzw. der (weiter unten beschriebenen) Vorrichtung (zum Ausführen wenigstens einer Fahrzeugfunktion) übertragen werden.

Das vorgeschlagene Verfahren bietet den Vorteil, dass hierbei auf Daten zurückgegriffen werden kann, welche seitens des Herstellers des zweiten Kraftstoffs bzw. der Tankstelle ohnehin verfügbar bzw. vorhanden sind. Bei einem Transport von Kraftstoff handelt es sich um einen Gefahrguttransport, sodass die Fahrer des Tankfahrzeugs Sicherheitsdatenblätter vorlegen müssen, in denen die Komponenten des Kraftstoffs (Analysegrößen, Anteilsgrößen, ggf. Kraftstoffgrößen) detailliert aufgeschlüsselt sind. Hierbei wäre es denkbar, dass die zweiten Kraftstoffdaten auf einer Speichereinrichtung der Tankstelle abgelegt sind und die Übertragung der zweiten Kraftstoffdaten zwischen dieser Speichereinrichtung der Tankstelle und dem Fahrzeug erfolgt. Es wäre auch denkbar, dass über die Tankstelle eine Verbindung zwischen dem Fahrzeug und einem Server des Herstellers des zweiten Kraftstoffs aufgebaut wird.

Bei einem bevorzugten Verfahren werden (zusätzlich zu den zweiten Kraftstoffdaten) Tankdaten an das Fahrzeug übertragen, wobei die Tankdaten charakteristisch für eine Position der Tankstelle bzw. der Zapfsäule der Tankstelle und/oder für einen Zeitpunkt des Tankvorgangs ist. Mit anderen Worten werden zusätzlich Daten übertragen, welche es ermöglichen im Nachhinein festzustellen, wann ein Fahrzeug wo welchen Kraftstoff getankt hat. Das vorgeschlagene Verfahren ist überall dort interessant, wo sich in Zukunft grüner Kraftstoff durchsetzen wird, wobei auch die Hersteller ein Interesse daran haben, nachweisen zu können, dass es sich bei dem getankten Kraftstoff um einen grünen Kraftstoff handelt. Mit anderen Worten kann so leicht nachgewiesen werden, dass ein grüner Kraftstoff getankt und verwendet wurde. Bevorzugt sind die Tankdaten charakteristisch für eine Menge (Volumen oder Masse) des getankten zweiten Kraftstoffs und bevorzugt werden die Tankdaten bei der Ermittlung des Kraftstoffgemischs berücksichtigt.

Bei einem vorteilhaften Verfahren werden die zweiten Kraftstoffdaten anhand wenigstens eines digitalen Zwillings ermittelt, wobei es sich bei dem digitalen Zwilling bevorzugt um eine insbesondere fälschungssicheres Zertifikat in Bezug auf den zweiten Kraftstoff und/oder in Bezug auf einen Hersteller des zweiten Kraftstoffs handelt. Bei einem bevorzugten Verfahren wird ein solches Zertifikat entlang der Transportstrecke insbesondere zwischen dem Hersteller und dem Endkunden über die Tankstelle übergeben.

In einem Schritt des erfindungsgemäßen Verfahren wird wenigstens eine Fahrzeuggröße und bevorzugt eine Vielzahl von Fahrzeuggrößen auf Grundlage der ermittelten Kraftstoffgemischdaten unter Verwendung eines trainierten Abgasermittlungsmodells maschinellen Lernens ermittelt. Bevorzugt wird auf Grundlage der ermittelten Kraftstoffgemischdaten (des zu verbrennenden Kraftstoffgemischs) unter Anwendung des trainierten Abgasermittlungsmodells (zunächst) wenigstens eine Verbrennungsgröße für das Kraftstoffgemisch ermittelt. Bevorzugt ist die wenigstens eine Verbrennungsgröße charakteristisch für eine Verbrennungseigenschaft des Kraftstoffgemischs und bevorzugt charakteristisch für eine Abgaszusammensetzung, eine Schadstoffbelastung und/oder eine Effizienz (effektiver Wirkungsgrad) bei der Verbrennung des Kraftstoffgemischs im Motor des Fahrzeugs.

Mit anderen Worten wird hierbei beispielsweise ermittelt, welche Abgaszusammensetzung bzw. welche Effizienz (effektiver Wirkungsgrad) für das Kraftstoffgemisch bei der Verbrennung in dem Motor des Fahrzeugs zu erwarten ist. Wie weiter unten noch detaillierter ausgeführt wird bzw. ist, wird bzw. wurde das Abgasermittlungsmodells auf Grundlage eines Trainingsdatensatzes trainiert, welcher eine Vielzahl von Fahrzeuggrößen umfasst. Bevorzugt sind die im Rahmen des Trainings des Abgasermittlungsmodells verwendeten Fahrzeuggrößen charakteristisch für wenigstens eine Fahrzeugfunktion und insbesondere für eine Einstellungsgröße des Fahrzeugs bzw. eines Teils des Fahrzeugs zum bzw. beim Ausführen dieser Fahrzeugfunktion. Beispielsweise handelt es sich bei der Fahrzeugfunktion um eine Antriebsfunktion des Fahrzeugs durch Verbrennung des Kraftstoffs im Motor. Bevorzugt ist (in diesem Fall) die Fahrzeuggröße charakteristisch für eine Einstellungsgröße des Antriebsstrangs des Fahrzeugs und damit bevorzugt charakteristisch für eine Antriebsbetriebsstrategie des Antriebsstrangs des Fahrzeugs. Mit anderen Worten ist eine ermittelte Fahrzeuggröße bevorzugt charakteristisch für wenigstens einen Betriebsparameter eines Antriebsstrangs des Fahrzeugs.

Bei einer bevorzugten Ausführungsform handelt es sich bei der Fahrzeugfunktion um eine Ausgabe der ermittelten Verbrennungsgröße. Hierbei wäre es denkbar, dass die wenigstens eine ermittelte Verbrennungsgröße zur Ausgabe insbesondere an einen Nutzer des Fahrzeugs oder an eine externe Stelle bereitgestellt wird. Dies bietet den Vorteil, dass der Nutzer des Fahrzeugs beispielsweise Informationen darüber erhält, welche Abgaszusammensetzung bei der Verbrennung des aktuellen Kraftstoffgemischs zu erwarten ist. Bevorzugt handelt es sich bei der wenigstens einen ermittelten Fahrzeuggröße um einen Steuerbefehl zum Ablegen der ermittelten Verbrennungsgröße und/oder zur Ausgabe der ermittelten Verbrennungsgröße. Bevorzugt ist die wenigstens eine ermittelte Fahrzeuggröße beispielsweise charakteristisch für eine durch die Verbrennung des Kraftstoffgemischs zu erwartende Abgaszusammensetzung. Bevorzugt erfolgt eine Ausgabe der ermittelten Verbrennungsgrüße über eine Anzeigeeinrichtung des Fahrzeugs und insbesondere über das HMI (Human Machine Interface).

Bei einem bevorzugten Verfahren wird auf Grundlage der ermittelten Kraftstoffgemischdaten wenigstens eine Verbrennungsgröße (für das Kraftstoffgemisch) ermittelt und auf Grundlage der wenigstens einen Verbrennungsgröße wird wenigstens eine Fahrzeuggröße ermittelt bzw. abgeleitet. Bevorzugt ist die ermittelte Fahrzeuggröße charakteristisch für die auszuführende Fahrzeugfunktion und insbesondere charakteristisch für wenigstens eine Einstellungsgröße des Fahrzeugs zum Ausführen der Fahrzeugfunktion. Mit anderen Worten beinhaltet die wenigstens eine Fahrzeuggröße Daten bzw. Anweisungen (z.B. in Form von Steuerbefehlen) in Bezug auf die auszuführende Fahrzeugfunktion. Gemäß dem obengenannten Beispiel kann es sich bei der Fahrzeugfunktion um eine Antriebsfunktion des Fahrzeugs handeln. In diesem Fall beinhaltet die ermittelte Fahrzeuggröße Anweisungen bzw. Parameter für den Antriebsstrang des Fahrzeugs bzw. Steuerbefehle für ein Motorsteuergerät. Beispielsweise ist die Fahrzeuggröße charakteristisch für eine Verdichtung des Kraftstoffs bei der Verbrennung im Motor oder charakteristisch für eine Einspritzeinstellung am Motor.

Bei einem bevorzugten Verfahren wird auf Grundlage der ermittelten Kraftstoffgemischdaten (zunächst) wenigstens eine Verbrennungsgröße ermittelt und bevorzugt wird hieraus wenigstens eine Fahrzeuggröße ermittelt und/oder abgeleitet. Hierbei wäre es denkbar, das bei der Ermittlung der wenigstens einen Fahrzeuggröße wenigstens eine und bevorzugt mehr als eine Verbrennungsgröße berücksichtigt werden. Bevorzugt erfolgt eine Berücksichtigung der wenigstens einen Verbrennungsgröße derart, dass eine optimierte und/oder vorgegebene Verbrennung des Kraftstoffgemischs im Motor erreicht wird. Hierzu wäre es beispielsweise denkbar, dass für eine Verbrennungsgröße in Form einer Abgaszusammensetzung nicht auf ein globales Minimum an CO₂ optimiert wird, da bei Erreichen des absoluten Minimus Einbußen bei der Effizienz hingenommen werden müssten. Bevorzugt wird die Fahrzeuggröße derart ermittelt, dass ein Kompromiss zwischen einer Reduktion der Abgasemissionen und einer optimalen Effizienz (effektiver Wirkungsgrad der Verbrennung) erreicht wird. Bevorzugt wird die wenigstens eine Fahrzeuggröße derart ermittelt, dass bei der Verbrennung des Kraftstoffgemischs die gesetzlichen Vorgaben eingehalten werden, gleichzeitig aber eine möglichst hohe Effizienz erreicht wird.

Bei einem bevorzugten Verfahren wird auf Grundlage der ermittelten Kraftstoffgemischdaten und auf Grundlage der wenigstens einen ermittelten Verbrennungsgröße unter Verwendung des trainierten Abgasermittlungsmodells maschinellen Lernens wenigstens eine Fahrzeuggröße sowie eine der wenigstens einen Fahrzeuggröße zugeordnete Verbrennungsgröße ermittelt. Bevorzugt werden die ermittelten Kraftstoffgemischdaten und die wenigstens eine ermittelte Verbrennungsgröße als Eingangsgröße für das Abgasermittlungsmodell maschinellen Lernens verwendet, wobei die wenigstens eine Fahrzeuggröße und eine der wenigstens einen Fahrzeuggröße zugeordneten Verbrennungsgröße als Ausgangsgröße erhalten wird.

Bei einer bevorzugten Ausführungsform erzeugt das trainierte Abgasermittlungsmodell maschinellen Lernens unter Verwendung der ermittelten Kraftstoffgemischdaten als Eingangsgröße wenigstens eine Verbrennungsgröße als Ausgangsgröße. Bevorzugt erzeugt das trainierte Abgasermittlungsmodell maschinellen Lernens unter Verwendung der ermittelten Kraftstoffgemischdaten und der wenigstens einen ermittelten Verbrennungsgröße als Eingangsgröße wenigstens eine Fahrzeuggröße und eine der wenigstens einen Fahrzeuggröße zugeordnete Verbrennungsgröße als Ausgangsgröße.

Bevorzugt ist die wenigstens eine ermittelte Fahrzeuggröße charakteristisch für wenigstens einen Betriebsparameter und bevorzugt für eine Vielzahl von Betriebsparametern des Antriebsstrangs des Fahrzeugs. Bevorzugt ist die zugeordnete Verbrennungsgröße beispielsweise charakteristisch für eine durch die Verbrennung des Kraftstoffgemischs resultierende Abgaszusammensetzung unter Anwendung der durch die wenigstens eine Fahrzeuggröße festgelegten Betriebsparameter. Mit anderen Worten wird ein Satz von Betriebsparametern ermittelt und eine für diese Betriebsparameter zu erwartende Abgaszusammensetzung.

Bei einem bevorzugten Verfahren wird die zugeordnete Verbrennungsgröße wiederum zusammen mit den ermittelten Kraftstoffgemischdaten als Eingangsgröße für das Abgasermittlungsmodell maschinellen Lernens verwendet, wobei wenigstens eine weitere Fahrzeuggröße sowie eine weitere dieser Fahrzeuggröße zugeordnete Verbrennungsgröße ermittelt wird. Bevorzugt handelt es sich bei dieser Vorgehensweise um ein Optimierungsverfahren, bzw. um ein Verfahren zur Ermittlung einer optimierten Fahrzeuggröße. Unter einen optimierten Fahrzeuggröße wird hierbei bevorzugt eine Fahrzeuggröße verstanden, welche charakteristisch für einen Satz von Betriebsparametern ist, unter welchen eine optimale Verbrennungsgröße erhalten wird. Mit anderen Worten wird eine optimierte Fahrzeuggröße und damit eine Vielzahl von optimierten Betriebsparametern derart ermittelt, dass eine optimierte Verbrennungsgröße erhalten wird. Wie bereits oben ausgeführt wird hierbei unter einer optimierten Verbrennungsgröße ein Kompromiss zwischen einer Reduktion der Abgasemissionen und einer optimalen Effizienz verstanden.

Bevorzugt wird die auf Grundlage der ermittelten Kraftstoffgemischdaten ermittelte wenigstens eine Verbrennungsgröße als Startpunkt für die Ermittlung der wenigstens einen optimierten Fahrzeuggröße (Startpunkt des Optimierungsverfahrens) verwendet. Es wäre auch denkbar, eine gemessene Verbrennungsgröße als Startpunkt für die Ermittlung der wenigstens einen optimierten Fahrzeuggröße zu verwenden. Dies ist beispielsweise möglich für ein zu verbrennendes Kraftstoffgemisch, bei welchem sowohl die Kraftstoffgemischdaten als auch wenigstens eine Verbrennungsgröße bekannt sind.

Bei einem bevorzugten Verfahren ist die ermittelte Fahrzeuggröße charakteristisch für eine Einstellunggröße wenigstens eines und bevorzugt einer Vielzahl von Parametern (Betriebsparameter) des Antriebsstrangs des Fahrzeug. Mit anderen Worten ist die ermittelte Fahrzeuggröße charakteristisch für eine Antriebsbetriebsstrategie und beinhaltet entsprechende Anweisungen bzw. Steuerbefehle für den Antriebsstrang des Fahrzeugs bzw. für ein Steuergerät des Antriebsstrangs. Bevorzugt wird die wenigstens eine Fahrzeugfunktion auf Grundlage der ermittelten Fahrzeuggröße ausgeführt. Mit anderen Worten wird nach einem Tankvorgang die Zusammensetzung des neuen Kraftstoffgemischs ermittelt und auf Grundlage dieser eine Antriebsbetriebsstrategie derart angepasst, dass die Verbrennung des neuen Kraftstoffgemischs optimal erfolgt.

Bevorzugt wird dieses Vorgehen nach jedem Tankvorgang wiederholt. Dies bietet den Vorteil, dass der Antriebsstrang des Fahrzeugs immer optimal an den derzeitigen Kraftstoff angepasst wird, was Vorteile in Bezug auf einen Kraftstoffverbrauch und reduzierte Schadstoffemissionen mit sich bringt. Bei einem bevorzugten Verfahren werden bei der Ermittlung der wenigstens einen Fahrzeuggröße wenigstens eine und bevorzugt eine Vielzahl von Fahrzeuggrößen berücksichtigt, welche während eines Trainingsprozesses bei der Erzeugung des trainierten Abgasermittlungsmodells maschinellen Lernens verwendet wurden. Mit anderen Worten werden die im Rahmen des Trainingsverfahrens des Modells verwendeten Fahrzeuggrößen herangezogen, um anhand der (auf Grundlage der ermittelten Kraftstoffgemischdaten) ermittelten Verbrennungsgröße wenigstens eine Fahrzeuggröße abzuleiten.

Bei einem bevorzugten Verfahren handelt es sich bei der Fahrzeugfunktion um eine Antriebsfunktion des Fahrzeugs und die wenigstens eine ermittelte Fahrzeuggröße ist charakteristisch für wenigstens eine Einstellungsgröße des Antriebsstrangs des Fahrzeugs, wobei die Einstellungsgröße des Antriebsstrang wenigstens einen Betriebsparameter und bevorzugt eine Vielzahl von Betriebsparametern umfasst. Bei einem bevorzugten Verfahren umfasst die wenigstens eine Fahrzeuggröße einen Steuerbefehl zur Anpassung wenigstens einer Einstellungsgröße des Antriebsstrangs des Fahrzeugs bzw. zur Anpassung wenigstens eines Betriebsparameters und bevorzugt zur Ausführung der Fahrzeugfunktion auf Grundlage der angepassten Einstellungsgröße bzw. auf Grundlage des wenigstens einen angepassten Betriebsparameters.

Bei einem vorteilhaften Verfahren ist die wenigstens eine Fahrzeuggröße charakteristisch für wenigstens eine Einstellungsgröße des Antriebsstrangs des Fahrzeugs und bevorzugt charakteristisch für eine Einstellungsgröße eines Kraftstoffsystems, eine Einstellungsgröße eines Luftpfads, eine Einstellungsgröße eines Zündsystems, eine Einstellungsgröße eines mechanischen Bestandteils (Mechanik), eine Einstellungsgröße eines Betriebsstoffs, eine Einstellungsgröße eines Abgaspfads und/oder für eine Betriebsart.

Bei einem bevorzugten Verfahren ist die wenigstens eine Fahrzeuggröße charakteristisch für eine Einstellungsgröße des Antriebsstrangs, wobei die Einstellungsgröße des Antriebsstrang wenigstens einen und bevorzugt eine Vielzahl von Betriebsparametern umfasst bzw. beinhaltet und/oder einen Steuerbefehl zur Anpassung wenigstens eines Betriebsparameters und bevorzugt einer Vielzahl von Betriebsparametern. Mit anderen Worten ist die Fahrzeuggröße charakteristisch für wenigstens einen und bevorzugt für eine Vielzahl von Betriebsparametern.

Bei einem bevorzugten Verfahren ist die wenigstens eine Fahrzeuggröße charakteristisch für eine Einstellungsgröße des Kraftstoffsystems und bevorzugt ist die wenigstens eine Fahrzeuggröße charakteristisch für wenigstens einen Betriebsparameter, welcher ausgewählt ist aus einer Gruppe von Betriebsparametern, welche eine Fördermenge, ein Einspritzsystem, einen Einspritzbeginn, ein Einspritzende, eine Anzahl an Einspritzungen, eine Einspritzmenge, eine Aufteilung der Einspritzmenge, einen Einspritzdruck und dergleichen sowie Kombinationen hiervon umfasst.

Bei einem bevorzugten Verfahren ist die wenigstens eine Fahrzeuggröße charakteristisch für eine Einstellungsgröße des Luftpfads und bevorzugt ist die wenigstens eine Fahrzeuggröße charakteristisch für wenigstens einen Betriebsparameter, welcher ausgewählt ist aus einer Gruppe von Betriebsparametern, welche eine Luftladestrecke, einen Ladedruck, eine Ladelufttemperatur, eine (Luftzahl) Lambda, eine AGR-Rate (Abgasrückführung), eine Drehmomentbegrenzung durch Eingriff in den Luftpfad und dergleichen sowie Kombinationen hiervon umfasst.

Bei einem bevorzugten Verfahren ist der wenigstens eine Fahrzeuggröße charakteristisch für eine Einstellungsgröße des Zündsystems und bevorzugt ist die wenigstens eine Fahrzeuggröße charakteristisch für wenigstens einen Betriebsparameter, welcher ausgewählt ist aus einer Gruppe von Betriebsparametern, welche einen Zündzeitpunkt, eine Klopfregelung (Früh- oder Spätverschiebung des Zündzeitpunkts) und dergleichen sowie Kombinationen hiervon umfasst.

Bei einem bevorzugten Verfahren ist der wenigstens eine Fahrzeuggröße charakteristisch für eine Einstellungsgröße der Mechanik und bevorzugt ist wenigstens die wenigstens eine Fahrzeuggröße charakteristisch für eine Einstellung einer Nockenwelle, einer Kurbelwelle, eines Getriebes, eines Hybrid-Betriebs, einer Betriebsfestigkeit, eines Kolbens und/oder eines Pleuels, wobei bevorzugt die wenigstens eine Fahrzeuggröße charakteristisch für wenigstens einen Betriebsparameter ist, welcher ausgewählt ist aus einer Gruppe von Betriebsparametern der wenigstens eine Betriebsparameter ausgewählt aus einer Gruppe von Betriebsparametern, welche eine Phaseneinstellung (Nockenwelle), eine Hubverstellung (Nockenwelle), eine Nockenprofilanpassung (Nockenwelle), eine variable Verdichtung (Kurbelwelle), Schaltpunkte (Getriebe), eine Schaltstrategie (Getriebe), einen Anteil von Verbrennungskraftmaschine (VKM) zu Elektromotor (E) (Hybrid-Antrieb), eine Zylinderspitzendruckregelung (Betriebsfestigkeit), eine variable Verdichtung (Kolben oder Pleuel) und dergleichen sowie Kombinationen umfasst.

Bei einem bevorzugten Verfahren ist der wenigstens eine Fahrzeuggröße charakteristisch für eine Einstellungsgröße der Betriebsstoffe und bevorzugt ist die wenigstens eine Fahrzeuggröße charakteristisch für Einstellung einer Kühlung, eines Öl-Systems oder eines Service, wobei bevorzugt ist die wenigstens eine Fahrzeuggröße charakteristisch für wenigstens einen Betriebsparameter ist, welcher ausgewählt ist aus einer Gruppe von Betriebsparametern welche eine Anpassung der Motorkühlung, ein Ölwechselintervall, ein Serviceintervall und dergleichen sowie Kombinationen hiervon umfasst.

Bei einem bevorzugten Verfahren ist der wenigstens eine Betriebsparameter charakteristisch für eine Einstellungsgröße des Abgaspfads und bevorzugt für eine Einstellung eines Partikelfilter, eines Turboladers und/oder von Abgasemissionen, wobei bevorzugt die wenigstens eine Fahrzeuggröße charakteristisch für wenigstens einen Betriebsparameter ist, welcher ausgewählt ist aus einer Gruppe von Betriebsparametern, welche ein Partikelregenerationsintervall, eine VTG bzw. WG-Einstellung (mit sich einstellender Abgastemperatur vor Turbine könnte mehr oder weniger Drehmoment zugelassen werden, unter der Bedingung Lambda=1), eine Anpassung der Abgasemissionen über Kombination verschiedener Betriebsparameter und dergleichen sowie Kombinationen hiervon umfassen.

Bei einem bevorzugten Verfahren ist der wenigstens eine Betriebsparameter charakteristisch für eine Einstellungsgröße der Betriebsart und bevorzugt ist die wenigstens eine Fahrzeuggröße charakteristisch für wenigstens einen Betriebsparameter, welcher ausgewählt ist aus einer Gruppe von Betriebsparametern, welche einen Motorstart, einen Katalysatorheizbetrieb, einen Halbmotorbetrieb, eine Partikelfilterregeneration und dergleichen sowie Kombinationen hiervon umfassen.

Bevorzugt erfolgt die Ermittlung der wenigstens einen Fahrzeuggröße unter Verwendung des trainierten Abgasermittlungsmodells maschinellen Lernens. Ein Verfahren zur Erzeugung eines solchen trainierten Abgasermittlungsmodells maschinellen Lernens wird weiter unten näher erläutert. Bevorzugt ist das trainierte Abgasermittlungsmodell maschinellen Lernens derart eingerichtet, dass die ermittelten Kraftstoffgemischdaten als Eingangsgröße verwendet werden und wenigstens eine Verbrennungsgröße als Ausgangsgröße erhalten wird, wobei auf Grundlage der ermittelten Verbrennungsgröße wenigstens eine Fahrzeuggröße ermittelt bzw. abgeleitet wird. Bevorzugt ist die ermittelte Fahrzeuggröße charakteristisch für eine optimierte Antriebsbetriebsstrategie. Bevorzugt wird in diesem Zusammenhang unter Optimierung eine Reduzierung von Abgasemissionen und eine Steigerung der Effizienz unter gleichzeitiger Einhaltung der gesetzlichen Vorgaben verstanden.

In einem weiteren Schritt des erfindungsgemäßen Verfahrens wird die wenigstens eine Fahrzeugfunktion auf Grundlage der ermittelten Fahrzeuggröße ausgeführt, wobei bevorzugt wenigstens ein Betriebsparameter und bevorzugt eine Vielzahl von Betriebsparametern der Antriebsstrategie auf Grundlage der wenigstens einen und bevorzugt auf Grundlage der Vielzahl von ermittelten Fahrzeuggrößen angepasst wird. Unter Anpassen wird in diesem Zusammenhang eine Änderung wenigstens eines Betriebsparameters dahingehend verstanden, dass die aus der Verbrennung des Kraftstoffgemischs resultierende Abgasemissionen reduziert werden und eine Effizienz gesteigert wird.

Bei einer alternativen Ausführungsform beinhalten die ermittelten zweiten Kraftstoffdaten keine Vielzahl von Analysegrößen und zugeordneten Anteilsgrößen, sondern es werden Daten in Bezug auf eine Klassifikation des zweiten Kraftstoffs ermittelt. Eine solche Klassifikation könnte beispielsweise "RON 98" (Research Octane Number) oder "paraffinischer Diesel" sein. Bei einer alternativen Ausführungsform werden die ersten und/oder zweiten Kraftstoffdaten nicht übertragen. In diesem Fall werden Daten in Bezug auf den Kraftstoff anhand von fahrzeuginternen Messgrößen abgeleitet, welche durch Erfassungseinrichtungen, beispielsweise durch eine Kraftstofferfassungseinrichtung oder einen Lamdasensor erfasst werden. Bevorzugt werden diese abgeleiteten Daten oder die erfassten Messgrößen als Eingangsgrößen für das trainierte Abgasermittlungsmodell maschinellen Lernens bei der Ermittlung der Verbrennungsgrößen verwendet.

Bei einer bevorzugten Ausführungsform ist eine Regelschleife vorgesehen mit welcher auf Grundlage einer ermittelten Verbrennungsgröße (Abgaszusammensetzung) auf wenigstens eine Fahrzeuggröße und insbesondere auf einen elektrisch regelbaren Motorparameter (Betriebsparameter) geschlossen werden kann. Bei einem bevorzugten Verfahren werden Tankdaten (wie oben beschrieben) ermittelt, welche charakteristisch für eine Position einer Tankstelle sowie charakteristisch für den getankten Kraftstoff sind. Hierbei wäre es auch denkbar auch die Daten einer Vielzahl verschiedener Fahrzeuge zurückzugreifen (Verwendung von Schwarmdaten) zur Ermittlung von Daten in Bezug auf einen getankten Kraftstoff.

Bei einer bevorzugten Ausführungsform werden bei der Ermittlung der wenigstens einen Fahrzeuggröße Umfeldgrößen berücksichtigt. Bevorzugt ist eine solche Umfeldgröße charakteristisch für eine Umgebungstemperatur oder einen Umgebungsdruck. Die Berücksichtigung der Umfeldbedingungen bietet den Vorteil, dass eine Steuerung des Antriebsstrangs noch effektiver erfolgen kann, da es beispielsweise bei geringen oder hohen Außendrücken erforderlich ist, eine Leistung zu drosseln, da die verwendeten Turbolader sonst zu schnell drehen.

Die vorliegende Erfindung ist weiterhin gerichtet auf ein computer-implementiertes Verfahren zur Erzeugung eines trainierten Abgasermittlungsmodells maschinellen Lernens zur Ermittlung wenigstens einer Verbrennungsgröße eines vorgegebenen Kraftstoffs unter Verwendung von Kraftstoffdaten, welche für eine Zusammensetzung des vorgegebenen Kraftstoffs charakteristisch sind, wobei die Kraftstoffdaten zu dem vorgegebenen Kraftstoff wenigstens eine Analysegröße und eine der Analysegröße zugeordnete Anteilsgröße umfassen, wobei die Analysegröße jeweils für eine Gruppe von Verbindungen aus dem vorgegebenen Kraftstoff charakteristisch ist, welche wenigstens eine vorgegebene Funktionalität aufweisen, und wobei die Anteilsgröße charakteristisch ist für einen Mengenanteil der in dem jeweiligen Kraftstoff befindlichen Verbindungen, welche in der durch die Analysegröße charakterisierte Gruppe gruppiert sind umfasst in einem Schritt das Bereitstellen eines trainierbaren Abgasermittlungsmodells maschinellen Lernens, welches einen Satz trainierbarer Parameter umfasst und welches auf Grundlage von zu einem vorgegebenen Kraftstoff erfassten Kraftstoffdaten oder hiervon abgeleiteter Daten als Eingangsgröße wenigstens eine Verbrennungsgröße als Ausgangsgröße erzeugt, wobei die Verbrennungsgröße charakteristisch für wenigstens eine Verbrennungseigenschaft des Kraftstoffs ist.

In einem Schritt der erfindungsgemäßen Verfahrens wird ein Trainingsdatensatz erzeugt umfassend eine Vielzahl erfasster oder ermittelter Kraftstoffdaten zu Trainings-Kraftstoffen sowie eine Vielzahl von gemessenen Verbrennungsgrößen, wobei die Verbrennungsgrößen jeweils charakteristisch für wenigstens eine Verbrennungseigenschaft des jeweiligen Trainings-Kraftstoffs sind, sowie eine Vielzahl von Fahrzeuggrößen, wobei die Fahrzeuggrößen charakteristisch für wenigstens eine Einstellungsgröße eines Motors sind, welcher zur Verbrennung der Trainings-Kraftstoffe verwendet wird. In einem weiteren Schritt des erfindungsgemäßen Verfahrens wird das Abgasermittlungsmodell maschinellen Lernens auf Grundlage des Trainingsdatensatzes trainiert.

Wie oben bereits angemerkt wird bei einem bevorzugten Verfahren ein Modell maschinellen Lernens (trainierbares Abgasermittlungsmodell maschinellen Lernens) bereitgestellt und anhand von Trainings-Kraftstoffgemischen bzw. anhand von Datensätzen in Bezug auf diese Trainings-Kraftstoffgemische trainiert.

Bevorzugt basiert das trainierbare Abgasermittlungsmodell maschinellen Lernens auf einem (künstlichen) neuronalen Netzwerk. Bevorzugt ist das neuronale Netzwerk ausgewählt aus einer Gruppe von neuronalen Netzwerken, welche Recurrent Neural Networks (RNNs), Long Short-Term Memory Networks (LSTMs), Gated Recurrent Units (GRUs), Temporal Convolutional Networks (TCNs), Transformer Networks, Convolutional Neural Networks (CNNs), Autoencoder, Time Delay Neural Networks (TDNNs), Echo State Networks (ESNs), Graph Neural Networks (GNNs) oder dergleichen umfasst.

Besonders bevorzugt handelt es sich bei dem neuronalen Netz um ein Recurrent Neural Network (RNN) und/oder um ein Long Short-Term Memory Network (LSTM) und/oder um ein Temporal Convolutional Network (TCN) und/oder um ein Echo State Network (ESN) und/oder um ein Graph Neural Network (GNN).

Bevorzugt handelt es sich bei dem trainierten Modell um ein, insbesondere trainierbares, Modell maschinellen Lernens, welches einen Satz insbesondere trainierbarer, Parameter umfasst, welche auf Werte eingestellt sind, die als Ergebnis eines Trainingsprozesses gelernt wurden.

Bevorzugt ist der Trainingsprozess bzw. ein Trainingsverfahren ausgewählt aus einer Gruppe von Trainingsverfahren, welches Supervised Learning, Unsupervised Learning, Semi-Supervised Learning, Reinforcement Learning, Transfer Learning, Ensemble Learning ,Cross-Validation, Bayesian Methods, Online Learning, Anomaly Detection und dergleichen umfasst. Besonders bevorzugt handelt es sich bei dem Trainingsverfahren um Supervised Learning und/oder um Reinforcement Learning und/oder um Cross-Validation.

Bei einem bevorzugten Verfahren wird hierzu ein Trainingsdatensatz erzeugt, welcher eine Vielzahl erfasster und/oder ermittelter Kraftstoffdaten zu Trainings-Kraftstoffen beinhaltet. Bei einem bevorzugten Verfahren sind solche Kraftstoffdaten charakteristisch für eine Zusammensetzung und/oder Eigenschaft des jeweiligen Trainings-Kraftstoffgemischs.

Bei einem bevorzugten Verfahren werden für einen Trainings-Kraftstoff und bevorzugt für jeden Trainings-Kraftstoff Kraftstoffdaten erzeugt und/oder ermittelt (wie bereits oben im Zusammenhang mit den ersten und zweiten Kraftstoffdaten beschrieben). Bei einem bevorzugten Verfahren umfassen die Kraftstoffdaten zu dem jeweiligen Trainings-Kraftstoff jeweils wenigstens eine Analysegröße und wenigstens eine der Analysegröße zugeordnete Anteilsgröße. Bevorzugt ist die Analysegröße charakteristisch für eine Gruppe von Verbindungen aus dem Trainings-Kraftstoff, welche wenigstens eine vorgegebene Funktionalität aufweisen. Bevorzugt ist die Anteilsgröße charakteristisch für einen Mengenanteil der in dem Trainings-Kraftstoff befindlichen Verbindungen, welche in der durch die Analysegröße charakteristische Gruppe gruppiert sind.

Unter einer "Erfassung von Kraftstoffdaten" wird insbesondere ein Empfangen der über eine Datenübertragungseinrichtung übermittelten Kraftstoffdaten und/oder ein Abrufen der Kraftstoffdaten von einer, insbesondere nichtflüchtigen, Speichereinrichtung (etwa einer externen Speichereinrichtung wie beispielsweise einem externen (Backend-)Server) durch eine, insbesondere Prozessor-basierte und bevorzugt nachfolgend näher beschriebene, Vorrichtung zur Erzeugung eines trainierten Abgasermittlungsmodells maschinellen Lernens zur Ermittlung wenigstens einer Verbrennungsgröße verstanden, so dass (durch das Erfassen) Kraftstoffdaten zur Datenverarbeitung der Kraftstoffdaten bereitgestellt werden.

Daneben kann gemäß einer weiteren Ausführungsform unter "Erfassung von Kraftstoffdaten" zusätzlich oder alternativ auch ein Ermitteln und/oder Erzeugen der Kraftstoffdaten zu verstehen sein. Dies könnte durch rechnerische Ermittlung, etwa durch Interpolation und/oder Extrapolation vorgegebener Datenwerte (etwa wenigstens einer oder mehrerer ähnlicher Kraftstoffe) und/oder durch experimentelles Erzeugen bzw. experimentelles Bestimmen und/oder experimentelles Messen der Kraftstoffdaten erfolgen.

Bei einem bevorzugten Verfahren umfasst der Trainingsdatensatz für wenigstens einen Trainings-Kraftstoff und bevorzugt für eine Vielzahl von Trainings-Kraftstoffen wenigstens eine und bevorzugt eine Vielzahl von Kraftstoffgrößen, welche als Eingangsgrößen zum Trainieren des Betriebsgrößen-Ermittlungsmodells maschinellen Lernen verwendet wird.

Bei einem bevorzugten Verfahren werden (zusätzlich zu den Kraftstoffdaten) für jeden Trainings-Kraftstoff Verbrennungsmessdaten und/oder wenigstens eine hiervon abgeleitete Verbrennungsgröße erfasst und/oder ermittelt. Bei einem bevorzugten Verfahren werden diese Daten mit Hilfe eines (Motoren-)Prüfstands erfasst. Hierbei werden die Trainings-Kraftstoff in einem Testmotor (unter realen Bedingungen) verbrannt und entsprechend Daten in Bezug auf die Verbrennung erfasst. Bevorzugt handelt es sich bei den erfassten und/oder ermittelten Verbrennungsdaten bzw. der hiervon abgeleiteten Verbrennungsgröße um eine Abgaszusammensetzung der bei der Verbrennung des Trainings-Kraftstoff entstehenden Abgase. Bevorzugt beinhalten die Verbrennungsdaten weitere Daten in Bezug auch eine Feinstaub- und/oder Rußpartikelbelastung oder Daten in Bezug auf eine Schadstoffbelastung (z.B. hinsichtlich der Anwesenheit von Stickoxiden). Bevorzugt handelt es sich bei der Verbrennungsgröße um eine von den Verbrennungsmessdaten abgeleitete Größe. Bevorzugt ist diese Verbrennungsgröße charakteristisch für eine Abgaszusammensetzung, eine Abgascharakteristik, einen Anteil an Stickoxiden im Abgas, einen Schadstoffbelastung, eine Feinstaubbelastung, eine Rußpartikelbelastung, einen Wirkungsgrad, eine Verbrenndauer und/oder für eine Effizienz (des Motors).

Es wäre denkbar, dass die (Verbrennungsmessdaten und/oder die hiervon abgeleitete) Verbrennungsgröße analog zu den Kraftstoffdaten von einer, insbesondere nichtflüchtigen, Speichereinrichtung (etwa einer externen Speichereinrichtung wie beispielsweise einem externen (Backend-)Server) abgerufen werden. Dies bietet den Vorteil, dass für Trainings-Kraftstoffe, welchen bereits am Prüfstand vermessen wurden, keine erneute Messung ausgeführt werden muss.

Bei einem bevorzugten Verfahren beinhaltet der Trainingsdatensatz eine Vielzahl von Fahrzeuggrößen, wobei die Fahrzeuggrößen charakteristisch für wenigstens eine Einstellungsgröße bzw. wenigstens einen Betriebsparameter des Antriebsstrangs des (Motoren-)Prüfstands sind. Mit anderen Worten stellt der Prüfstand einen Antriebsstrang eines Fahrzeugs mit Verbrennungsmotor dar und die Fahrzeuggrößen beinhalten Daten in Bezug auf den Antriebsstrang. Bevorzugt ist wenigstens eine und bevorzugt ist die Vielzahl von Fahrzeuggrößen charakteristisch für wenigstens einen Betriebsparameter und bevorzugt für eine Vielzahl von Betriebsparametern.

Bei einem bevorzugten Verfahren umfasst der verwendete Trainingsdatensatz Datensätze in Bezug auf eine Vielzahl von Trainings-Kraftstoffen und bevorzugt mehr als 50, bevorzugt mehr als 100 und besonders bevorzugt mehr als 150 Datensätze zu Trainings-Kraftstoffen. Bei einem bevorzugten Verfahren wird zur Erzeugung der Datensätze für den Trainingsdatensatz wenigstens einer und bevorzugt eine Vielzahl von Einstellungen bzw. Betriebsparametern (Fahrzeuggrößen) konstant gehalten, werden wenigstens ein anderer und bevorzugt eine Vielzahl anderer Einstellungen bzw. Betriebsparameter (Fahrzeuggrößen) variiert werden. Hierbei wäre es denkbar, dass Parameter, welche sich bereits in der Vergangenheit als optimal erwiesen haben (Optimierung bringt keinen nennenswerten Vorteil mehr) oder welche im laufenden Betrieb nicht einfach oder gar nicht verstellt werden können (z.B. technisch bedingt) können hierbei konstant gehalten werden. Beispielsweise können hierbei ein Zündwinkel oder Ladedruck sowie eine Nockenwelleneinstellung variiert werden.

Bei einem bevorzugten Verfahren werden bei der Auswahl der Trainingskraftstoffe die Normgrenzen der EN 228 berücksichtigt.

Bei einem bevorzugten Verfahren sind die erzeugten Trainingsdaten bzw. der erzeugte Trainingsdatensatz charakteristisch für den verwendeten Motor (Prüfstand). Bei einem bevorzugten Verfahren sind die erzeugten Trainingsdaten bzw. das trainierte Abgasermittlungsmodell auf andere artverwandte Motoren übertragbar. Unter artverwandten Motoren werden hierbei Motoren verstanden, welche in Bezug auf ein Hub-Bohrungsverhältnis (Verhältnis von Kolbenhub zu Zylinderdurchmesser) nicht um mehr als 15 % und bevorzugt nicht um mehr als 10 % abweichen. Weiterhin werden bevorzugt unter artverwandten Motoren hierbei Motoren verstanden, welche in Bezug auf eine Lage der Zündkerze(n) (z.B. zentral im Brennraum) und eines Injektors (z.B. seitlich) ähnlich zueinander sind. Weiterhin werden bevorzugt unter artverwandten Motoren hierbei Motoren verstanden, welche in Bezug auf Ventileinstellungen und einem Einströmverhalten ähnlich zueinander sind. Weiterhin sollte es sich um gleichartige Motoren handeln, beispielsweise um Saugmotoren oder turboaufgeladene Motoren, wobei bevorzugt heutzutage Saugmotoren weniger relevant sein dürften.

Die vorliegende Erfindung ist weiterhin gerichtet auf eine insbesondere Prozessor-basierte Vorrichtung zum Ausführen wenigstens einer Fahrzeugfunktion eines Fahrzeugs in Abhängigkeit von einem zu verbrennenden Kraftstoffgemisch, wobei die Vorrichtung dazu geeignet und bestimmt ist, Kraftstoffgemischdaten in Bezug auf das zu verbrennende Kraftstoffgemisch zu ermitteln, wobei die ermittelten Kraftstoffgemischdaten charakteristisch für wenigstens eine Eigenschaft des zu verbrennenden Kraftstoffgemischs sind. Erfindungsgemäß ist die Vorrichtung dazu geeignet und bestimmt, wenigstens eine Fahrzeuggröße zum Ausführen der wenigstens einen Fahrzeugfunktion auf Grundlage der ermittelten Kraftstoffgemischdaten unter Verwendung eines trainierten Abgasermittlungsmodells maschinellen Lernens zu ermitteln, wobei das trainierte Abgasermittlungsmodell maschinellen Lernens unter Verwendung der ermittelten Kraftstoffgemischdaten als Eingangsgröße wenigstens eine Verbrennungsgröße als Ausgangsgröße erzeugt, wobei die Verbrennungsgröße charakteristisch für wenigstens eine Verbrennungseigenschaft des zu verbrennenden Kraftstoffgemisch. Weiterhin ist die Vorrichtung dazu geeignet und bestimmt, die wenigstens eine Fahrzeugfunktion auf Grundlage der ermittelten Fahrzeuggröße auszuführen.

Bevorzugt weist die Vorrichtung zum Ausführen wenigstens einer Fahrzeugfunktion eine Datenübertragungseinrichtung auf, welche dazu eingerichtet ist, erste Kraftstoffdaten von einer Speichereinrichtung des Fahrzeugs abzurufen. Bevorzugt ist die Datenübertragungseinrichtung dazu eingerichtet, zweite Kraftstoffdaten von einer von einer nichtflüchtigen, externen Speichereinrichtung, insbesondere von einem externen (Backend-)Server abzurufen. Bevorzugt ist die Datenübertragungseinrichtung dazu geeignet und bestimmt, die zweiten Kraftstoffdaten über eine kabellose oder über eine kabelgebundene Kommunikationsverbindung zu übertragen. Bevorzugt weist das Fahrzeug eine Kommunikationsschnittstelle auf, welche über eine Steckverbindung mit einer Datenübertragungseinrichtung der Tankstelle verbindbar ist. Bevorzugt ist die Datenüberragungseinrichtung der Vorrichtung dazu eingerichtet, über die Kommunikationsschnittstelle des Fahrzeugs eine Kommunikationsverbindung mit der Datenübertragungseinrichtung der Tankstelle aufzubauen. Bevorzugt werden die zweiten Kraftstoffdaten über diese Kommunikationsverbindung übertragen.

Bei einer alternativen Ausführungsform ist die Vorrichtung zum Ausführen wenigstens einer Fahrzeugfunktion dazu eingerichtet, erste Kraftstoffdaten von einer Kraftstofferfassungseinrichtung des Fahrzeugs abzurufen bzw. erste Kraftstoffdaten von einer Speichereinrichtung des Fahrzeug abzurufen, welche mittels einer Kraftstofferfassungseinrichtung des Fahrzeugs erfasst und auf der Speichereinrichtung des Fahrzeugs abgelegt wurden.

Bevorzugt ist die Vorrichtung zum Ausführen wenigstens einer Fahrzeugfunktion dazu eingerichtet, auf Grundlage der abgerufenen ersten und zweiten Kraftstoffdaten unter Verwendung eines (oben beschriebenen) Mischungsmodells Kraftstoffgemischdaten in Bezug auf zu verbrennende Kraftstoffgemisch zu ermitteln. Bevorzugt ist die Vorrichtung zum Ausführen wenigstens einer Fahrzeugfunktion dazu eingerichtet, unter Verwendung des trainierten Abgasermittlungsmodell maschinellen Lernens auf Grundlage der ermittelten Kraftstoffgemischdaten wenigstens eine Verbrennungsgröße zu ermitteln und bevorzugt anhand der ermittelten wenigstens einen Verbrennungsgröße wenigstens eine Fahrzeuggröße zu ermitteln bzw. abzuleiten. Bevorzugt die Vorrichtung zum Ausführen wenigstens einer Fahrzeugfunktion weiterhin dazu eingerichtet, auf Grundlage der ermittelten wenigstens einen Fahrzeugfunktion wenigstens eine Fahrzeugfunktion auszuführen. Hierbei wäre es denkbar, dass die Vorrichtung zum Ausführen wenigstens einer Fahrzeugfunktion dazu eingerichtet ist, auf Grundlage der ermittelten Fahrzeuggröße wenigstens einen Steuerbefehl zu erzeugen um den entsprechenden Bestandteil des Fahrzeugs anzusteuern. Bevorzugt handelt es sich bei der wenigstens einen Fahrzeugfunktion um einen Antrieb des Fahrzeugs.

Bevorzugt ist die Vorrichtung zum Ausführen wenigstens einer Fahrzeugfunktion dazu eingerichtet, geeignet und/oder bestimmt, das obig beschriebene Verfahren zum Ausführen wenigstens einer Fahrzeugfunktion sowie alle bereits obig im Zusammenhang mit dem Verfahren (oder einer bevorzugten Ausführungsform des Verfahrens) beschriebene Verfahrensschritte einzeln oder in Kombination miteinander auszuführen. Umgekehrt kann das Verfahren mit allen im Rahmen der Vorrichtung zum Ausführen wenigstens einer Fahrzeugfunktion beschriebenen Merkmalen einzeln oder in Kombination miteinander ausgestattet sein.

Die vorliegende Erfindung ist weiterhin gerichtet auf eine insbesondere Prozessor-basierte Vorrichtung zum Erzeugen eines trainierten Abgasermittlungsmodells maschinellen Lernens zur Ermittlung wenigstens einer Verbrennungsgröße eines vorgegebenen Kraftstoffs unter Verwendung von Kraftstoffdaten, welche für eine Zusammensetzung des vorgegebenen Kraftstoffs charakteristisch sind, wobei die Kraftstoffdaten zu dem vorgegebenen Kraftstoff wenigstens eine Analysegröße und eine der Analysegröße zugeordnete Anteilsgröße umfasst, wobei die Analysegröße jeweils für eine Gruppe von Verbindungen aus dem vorgegebenen Kraftstoff charakteristisch ist, welche wenigstens eine vorgegebene Funktionalität aufweisen, und wobei die Anteilsgröße charakteristisch ist für einen Mengenanteil der in dem jeweiligen Kraftstoff befindlichen Verbindungen, welche in der durch die Analysegröße charakterisierte Gruppe gruppiert sind.

Weiterhin ist die Vorrichtung dazu geeignet und bestimmt, ein trainierbares Abgasermittlungsmodell maschinellen Lernens bereitzustellen, welches einen Satz trainierbarer Parameter umfasst und welches auf Grundlage von zu einem vorgegebenen Kraftstoff erfassten Kraftstoffdaten oder hiervon abgeleiteter Daten als Eingangsgröße wenigstens eine Verbrennungsgröße als Ausgangsgröße erzeugt, wobei die Verbrennungsgröße charakteristisch für wenigstens eine Verbrennungseigenschaft des Kraftstoffs ist. Weiterhin ist die Vorrichtung dazu geeignet und bestimmt, einen Trainingsdatensatz zu erzeugen umfassend eine Vielzahl erfasster Kraftstoffdaten zu Trainings-Kraftstoffen sowie eine Vielzahl von gemessenen Verbrennungsgrößen, wobei die Verbrennungsgrößen jeweils charakteristisch für wenigstens eine Verbrennungseigenschaft des jeweiligen Trainings-Kraftstoffs sind, sowie eine Vielzahl von Fahrzeuggrößen, wobei die Fahrzeuggrößen charakteristisch für wenigstens eine Einstellungsgröße eines Motors sind, welcher zur Verbrennung der Trainings-Kraftstoffe verwendet wird. Weiterhin ist die Vorrichtung dazu geeignet und bestimmt, das Abgasermittlungsmodell maschinellen Lernens auf Grundlage des Trainingsdatensatzes zu trainieren.

Bevorzugt ist die Vorrichtung zum Erzeugen eines trainierten Abgasermittlungsmodells dazu eingerichtet, geeignet und/oder bestimmt, das obig beschriebene Verfahren zum Erzeugen eines trainierten Abgasermittlungsmodells sowie alle bereits obig im Zusammenhang mit dem Verfahren (oder einer bevorzugten Ausführungsform des Verfahrens) beschriebene Verfahrensschritte einzeln oder in Kombination miteinander auszuführen. Umgekehrt kann das Verfahren mit allen im Rahmen der Vorrichtung zum Erzeugen eines trainierten Abgasermittlungsmodells beschriebenen Merkmalen einzeln oder in Kombination miteinander ausgestattet sein.

Die vorliegende Erfindung ist weiterhin gerichtet auf Fahrzeug, insbesondere Kraftfahrzeug mit einer Vorrichtung zum Ausführen wenigstens einer Fahrzeugfunktion gemäß einer zuvor beschriebenen Ausführungsform. Bei dem Fahrzeug kann es sich insbesondere um ein (motorisiertes) Straßenfahrzeug handeln.

Bei einem Fahrzeug kann es sich um ein Kraftfahrzeug handeln, welches insbesondere ein von dem Fahrer selbst gesteuertes Kraftfahrzeug ("Driver only"), ein halbautonomes, autonomes (beispielsweise der Autonomiestufe Level 3 oder 4 oder 5 (der Norm SAE J3016)) oder selbstfahrendes Kraftfahrzeug ist. Die Autonomiestufe Level 5 bezeichnet dabei vollautomatisch fahrende Fahrzeuge. Ebenso kann es sich bei dem Fahrzeug um ein fahrerloses Transportsystem handeln. Das Fahrzeug kann dabei von einem Fahrer gesteuert werden oder autonom fahren. Darüber hinaus kann es sich bei dem Fahrzeug neben einem Straßenfahrzeug auch um ein Flugtaxi, ein Flugzeug und ein anderes Fortbewegungsmittel oder eine andere Fahrzeugart handeln, beispielsweise ein Luft-, Wasser- oder Schienenfahrzeug.

Bevorzugt ist sind die oben beschriebenen Verfahren und/oder Vorrichtungen ebenfalls anwendbar für die Verwendung bei Turbinen, Flugzeugen und/oder Schiffen.

Die vorliegende Erfindung ist weiterhin gerichtet auf ein Computerprogramm oder Computerprogrammprodukt, umfassend Programmmittel, insbesondere einen Programmcode, welcher zumindest einige der und bevorzugt alle Verfahrensschritte der erfindungsgemäßen Verfahren (Verfahren zum Ausführen wenigstens einer Fahrzeugfunktion und Verfahren zur Erzeugung eines trainierten) und bevorzugt eine der beschriebenen bevorzugten Ausführungsformen repräsentiert oder kodiert und zum Ausführen durch eine Prozessoreinrichtung ausgebildet ist.

Die vorliegende Erfindung ist weiterhin gerichtet auf einen Datenspeicher, auf welchem zumindest eine Ausführungsform des erfindungsgemäßen Computerprogramms oder einer bevorzugten Ausführungsform des Computerprogramms gespeichert ist.

Weitere Vorteile und Ausführungsformen ergeben sich aus den beigefügten Zeichnungen:
Darin zeigen:
- Fig. 1: ein Fahrzeug mit einer erfindungsgemäßen Vorrichtung zum Ausführen wenigstens einer Fahrzeugfunktion gemäß einer Ausführungsform,
- Fig. 2: eine schematische Darstellung einer Ausführungsform eines erfindungsgemäßen Verfahrens zum Ausführen wenigstens einer Fahrzeugfunktion,
- Fig.3: eine schematische Darstellung einer Ausführungsform eines erfindungsgemäßen Verfahrens zur Erzeugung eines trainierten Abgasermittlungsmodells maschinellen Lernens,
- Fig. 4: eine schematische Darstellung einer Ausführungsform eines erfindungsgemäßen Verfahrens zum Ausführen wenigstens einer Fahrzeugfunktion.

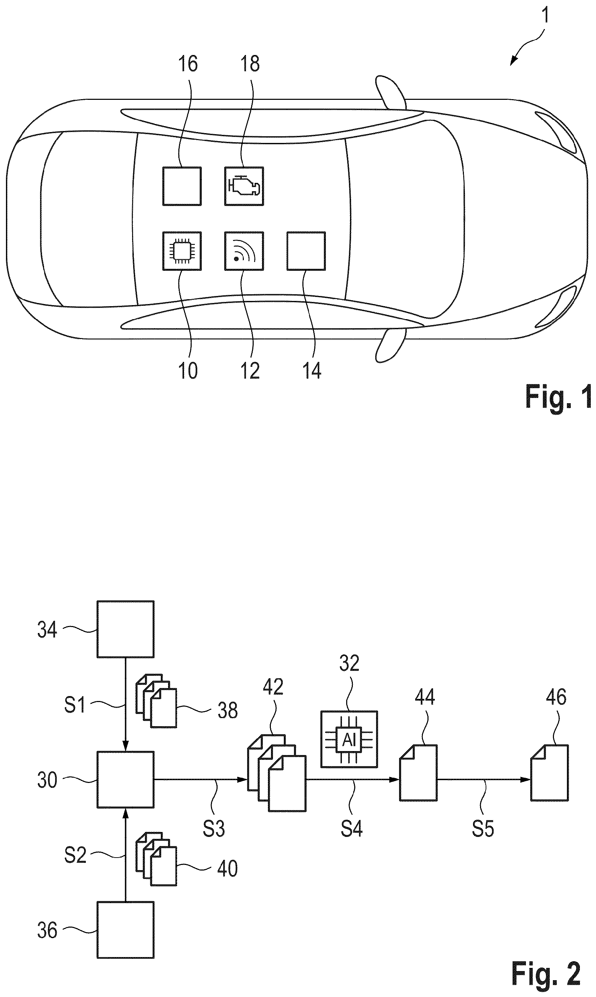

In Figur 1 ist ein Fahrzeug 1 gezeigt, welche eine Vorrichtung zum Ausführen wenigstens einer Fahrzeugfunktion 10 gemäß einer Ausführungsform aufweist. Das Fahrzeug 1 weist weiterhin eine Datenübertragungseinrichtung 12 auf, welche dazu geeignet zweite Kraftstoffdaten 40 von einer zweiten Speichereinrichtung 36 (nicht gezeigt) abzurufen bzw. zu empfangen. Weiterhin weist das Fahrzeug 1 eine Speichereinrichtung 14 auf, auf welcher bevorzugt eine Ausführungsform eines erfindungsgemäßen Computerprogramms gespeichert ist. Bevorzugt handelt es sich der Speichereinrichtung 14 um dieselbe Speichereinrichtung 34, auf welcher die ersten Kraftstoffdaten 38 abgelegt sind. Bei einer alternativen Ausführungsform weist das Fahrzeug 1 weiterhin eine (Kraftstoff-)Erfassungseinrichtung 16 auf, welche dazu eingerichtet ist, die Kraftstoffdaten 42 mittels einer (fahrzeugeigenen) Sensoreinrichtung zu erfassen. Das Bezugszeichen 18 kennzeichnet einen Antriebsstrang des Fahrzeugs 1.

In Figur 2 ist eine schematische Darstellung einer Ausführungsform eines erfindungsgemäßen Verfahrens zum Ausführen wenigstens einer Fahrzeugfunktion gezeigt. Das Bezugszeichen 34 kennzeichnet hierbei eine erste Speichereinrichtung, auf welcher die ersten Kraftstoffdaten 38 abgelegt sind. Bevorzugt handelt es sich bei der ersten Speichereinrichtung 34 um eine Speichereinrichtung des Fahrzeugs 1. Das Bezugszeichen 36 kennzeichnet eine zweite Speichereinrichtung, auf welcher die zweiten Kraftstoffdaten 40 abgelegt sind. Bevorzugt handelt es sich bei der zweiten Speichereinrichtung 36 um einen externen nichtflüchtigen Speicher und insbesondere um einen externen (Backend-)Server. Bevorzugt handelt es sich hierbei um eine Speichereinrichtung einer Tankstelle oder eines Herstellers des zweiten Kraftstoffs.

In einem Schritt S1 werden erste Kraftstoffdaten 38 von der ersten Speichereinrichtung 34 abgerufen. Bevorzugt handelt es sich bei den ersten Kraftstoffdaten 38 um Daten in Bezug auf einen im Tank des Fahrzeugs befindlichen ersten Kraftstoff. Bevorzugt umfassen die ersten Kraftstoffdaten 38 ein Vielzahl von Analysegrößen und diesen zugeordneten Anteilsgrößen. Bevorzugt umfassen die ersten Kraftstoffdaten 38 eine Vielzahl von Kraftstoffgrößen. Mit anderen Worten sind die ersten Kraftstoffdaten 38 charakteristisch für eine Zusammensetzung des ersten Kraftstoffs und charakteristisch für die Eigenschaften des ersten Kraftstoffs. Bevorzugt beinhalten die ersten Kraftstoffdaten 38 auch Daten in Bezug auf eine Menge bzw. ein Volumen (oder Masse) des ersten Kraftstoffs (im Tank des Fahrzeugs).

In einem weiteren Schritt S2 werden zweite Kraftstoffdaten 40 von der zweiten Speichereinrichtung 36 abgerufen. Bevorzugt erfolgt das Abrufen mit Hilfe der Datenübertragungseinrichtung 12 des Fahrzeugs 1. Bevorzugt handelt es sich bei der zweiten Speichereinrichtung 36 um eine externen (Backend-)Server. Bevorzugt erfolgt das Abrufen der zweiten Kraftstoffdaten 40 im Rahmen eines Tankvorgangs an einer Tankstelle. Bevorzugt wird zur Übertragung der zweiten Kraftstoffdaten 40 eine kabellose oder eine kabelgebundene (z.B. über einen Zapfhahn) Verbindung mit dem Fahrzeug 1 aufgebaut. Bevorzugt handelt es sich bei den zweiten Kraftstoffdaten 40 um Daten in Bezug auf einen getankten zweiten Kraftstoff.

Bevorzugt umfassen die zweiten Kraftstoffdaten 40 ein Vielzahl von Analysegrößen und diesen zugeordneten Anteilsgrößen. Bevorzugt umfassen die zweiten Kraftstoffdaten 40 eine Vielzahl von Kraftstoffgrößen. Mit anderen Worten sind die zweiten Kraftstoffdaten 40 charakteristisch für eine Zusammensetzung des zweiten Kraftstoff und charakteristisch für die Eigenschaften des zweiten Kraftstoffs. Bevorzugt beinhalten die zweiten Kraftstoffdaten 40 auch Daten in Bezug auf eine Menge bzw. ein Volumen der zweiten Kraftstoffkomponente (welcher an der Tankstelle getankt wurde).

In einem weiteren Schritt S3 werden auf Grundlage der abgerufenen ersten Kraftstoffdaten 38 und zweiten Kraftstoffdaten 40 unter Anwendung eines Mischungsmodells 30 die Kraftstoffgemischdaten 42 ermittelt. Umfassen beispielsweise die ersten Kraftstoffdaten 38 und die zweiten Kraftstoffdaten 40 lediglich Analysegröße und Anteilsgrößen, so lassen sich die Kraftstoffgemischdaten 42 durch ein einfaches mathematisches Modell ermitteln (Kombinatorik). Beinhalten jedoch die ermittelten ersten 38 und zweiten Kraftstoffdaten 40 zusätzlich zu den Analysegrößen und Anteilsgrößen auch Kraftstoffgrößen (z.B. Daten in Bezug auf einen Dampfdruck oder eine Oktanzahl) und soll für die Kraftstoffgemischdaten 42 auch eine solche Kraftstoffgröße ermittelt werden, so ist dies mit einem einfachen mathematischen Modell nicht möglich. In diesem Fall kann als Mischungsmodell 30 ein trainiertes Kraftstoffeigenschaft-Ermittlungsmodell herangezogen werden, welches beispielsweise aus der DE 10 2022 207 017 der Anmelderin bekannt ist. Bevorzugt sind die Kraftstoffgemischdaten 42 charakteristisch für eine Zusammensetzung des zu verbrennenden Kraftstoffgemischs und charakteristisch für die Eigenschaften des zu verbrennenden Kraftstoffgemischs. Bevorzugt wird das zu verbrennende Kraftstoffgemisch aus dem ersten und dem zweiten Kraftstoff gebildet.

In einem weiteren Schritt S4 wird auf Grundlage der Kraftstoffdaten 42 unter Anwendung des trainierten Abgasermittlungsmodells maschinellen Lernens 32 wenigstens eine Verbrennungsgröße 44 ermittelt. Bevorzugt wird in einem weiteren Schritt S5 wenigstens eine Fahrzeuggröße 46 auf Grundlage der ermittelten Verbrennungsgröße 44 ermittelt bzw. abgeleitet. Bevorzugt handelt es sich hier bei der Fahrzeugfunktion um eine Ausgabe der ermittelten Verbrennungsgröße 44. Bevorzug ist die ermittelte Fahrzeuggröße 46 charakteristisch für einen Steuerbefehl zum Ablegen und/oder zur Ausgabe der ermittelten Verbrennungsgröße 44. c

In einem weiteren Schritt (nicht gezeigt) wird auf Grundlage der ermittelten Fahrzeuggröße 46 eine Fahrzeugfunktion ausgeführt. Bevorzugt wird hierbei wenigstens ein Betriebsparameter des Antriebsstrangs 18 des Fahrzeugs 1 angepasst. Bevorzugt ist die wenigstens eine ermittelte Fahrzeuggröße 46 charakteristisch für wenigstens einen Betriebsparameter und bevorzugt für einen Wert dieses Betriebsparameters. Bevorzugt dient die Fahrzeuggröße 46 dazu, einen Betriebsparameter des Antriebsstrangs an das durch den Trankvorgang neu entstandene Kraftstoffgemisch (zu verbrennendes Kraftstoffgemisch) anzupassen. Beispielsweise kann eine Einstellungsgröße am Einspritzsystem oder an einer Verdichtung des Kraftstoffs angepasst werden.

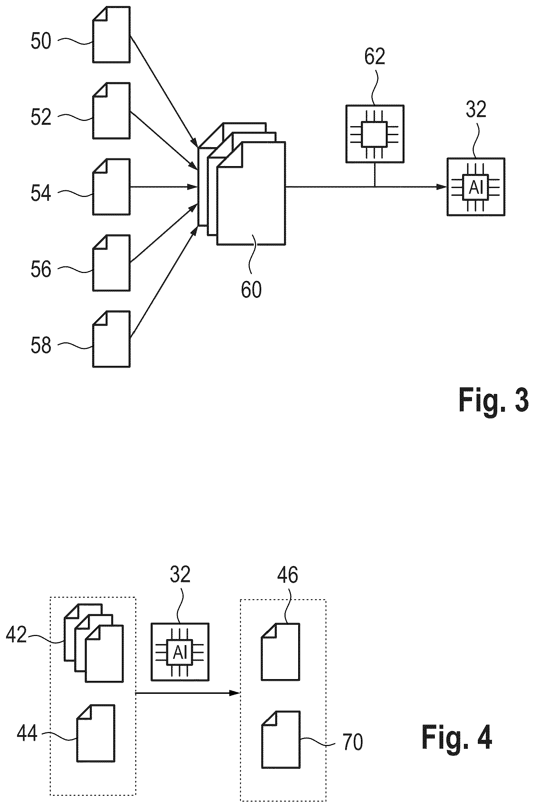

In Figur 3 ist eine schematische Darstellung einer Ausführungsform eines erfindungsgemäßen Verfahrens zur Erzeugung eines trainierten Abgasermittlungsmodells 32 gezeigt. Zunächst wird ein untrainiertes (trainierbares) Abgasermittlungsmodell 62 bereitgestellt und mit einem Trainingsdatensatz 60 trainiert. Der Trainingsdatensatz 60 umfasst hierbei eine Vielzahl von Analysegrößen 50, eine Vielzahl von Anteilsgrößen 52, eine Vielzahl von Kraftstoffgrößen 54 und/oder eine Vielzahl von Fahrzeuggrößen 56. Diese Analysegrößen 50, Anteilsgrößen 52 und die Kraftstoffgrößen 54 können beispielsweise anhand von Messungen (z.B. chemische Vollanalyse) ermittelt werden oder von einer Datenbank abgerufen werden. Hierbei wäre es denkbar, dass die Analysegrößen 50, die Anteilsgrößen 52 und die Kraftstoffgrößen 54 anhand einer chemischen Analyse eines Kraftstoffgemischs erhalten werden.

Eine beispielhafte Analysegröße 50 stellt die Gruppe von Oxygenaten dar, welche in einem Anteil von 20 Vol.-% (Anteilsgröße 52) in dem Kraftstoffgemisch vorliegen. Eine beispielhafte Kraftstoffgröße 54 stellt eine Oktanzahl von 95 dar. Der Trainingsdatensatz 60 enthält weiterhin wenigstens eine Fahrzeuggröße 56. Hierbei handelt es sich um eine Größe, welche charakteristisch für einen Betriebsparameter des Motors oder eines Bauteil des Motors oder für eine Software- oder Hardware-Einstellung des Motors bzw. der Motorsteuerung ist. Mit anderen Worten ist die Fahrzeuggröße 56 charakteristisch für wenigstens eine Eigenschaft/Einstellung eines Motors sind, welcher zur Verbrennung des Trainings-Kraftstoffs und zur Ermittlung der Verbrennungsgrößen 58 verwendet wird und bevorzugt charakteristisch für wenigstens einen Betriebsparameters der Antriebsbetriebsstrategie des Antriebsstrangs des Fahrzeugs ist. Eine beispielshafte Fahrzeuggröße 56 ist beispielsweise charakteristisch für ein eingestelltes Verdichtungsverhältnis von 10:1 dar. Die Größen 50 bis 56 dienen vorliegend als Eingangsgrößen für das Abgasermittlungsmodell maschinellen Lernens.

Der Trainingsdatensatz 60 beinhaltet weiterhin wenigstens eine Verbrennungsgröße 58. Eine solche Verbrennungsgröße 58 ist charakteristisch für wenigstens eine Eigenschaft des Kraftstoffgemischs bei der Verbrennung, z.B. an einem Motorprüfstand. Eine beispielhafte Verbrennungsgröße 58 ist charakteristisch für eine Abgaszusammensetzung und beinhaltet beispielsweise einen Anteil von Feinstaub in den Abgasen oder einen Anteil von Stickoxiden in den Abgasen. Die Verbrennungsgröße 58 dient vorliegend als Ausgangsgröße für das Abgasermittlungsmodell maschinellen Lernens. Mit anderen Worten beinhaltet der Trainingsdatensatz 60 eine Vielzahl von Eingangsgrößen (Größen 50, 52, 54, 56) und Ausgangsgrößen (Verbrennungsgrößen 58).

Der Trainingsdatensatz 60 wird zum Trainieren eines untrainierten Abgasermittlungsmodells 62 verwendet, wodurch ein trainiertes Abgasermittlungsmodell 32 erhalten wird, welches bevorzugt in einem Verfahren gemäß Fig. 2 verwendet wird.

Figur 4 zeigt eine schematische Darstellung einer Ausführungsform eines erfindungsgemäßen Verfahrens zur Ermittlung wenigstens einer Fahrzeuggröße 46. Hierbei werden die ermittelten Kraftstoffgemischdaten 42 und die wenigstens eine ermittelte Verbrennungsgröße 44 als Eingangsgröße für das trainierte Abgasermittlungsmodell maschinellen Lernens 32 verwendet, wobei wenigstens eine Fahrzeuggröße 46 und eine der wenigstens einen Fahrzeuggröße 46 zugeordnete Verbrennungsgröße 70 als Ausgangsgröße erhalten werden. Beispielsweise ist die zugeordnete Verbrennungsgröße 70 charakteristisch für eine Zusammensetzung der Abgase, welche aus der Verbrennung des Kraftstoffgemischs unter Verwendung der ermittelten Vielzahl von Betriebsparametern (abgeleitet von der ermittelten Fahrzeuggröße 46) resultiert.

Mit anderen Worten dient die ermittelte Verbrennungsgröße 44 als Ausgangspunkt für die Ermittlung der wenigstens einen Fahrzeuggröße 46 und bevorzugt für die Ermittlung wenigstens einer optimierten Fahrzeuggröße. Es wäre auch möglich, eine gemessene Verbrennungsgröße als Ausgangspunkt für die Ermittlung der wenigstens einen optimierten Fahrzeuggröße zu verwenden sofern für ein zu verbrennendes Kraftstoffgemisch sowohl die Kraftstoffgemischdaten 42 als auch die Verbrennungsgröße 44 (aus Messdaten) bekannt sind. Bei einem bevorzugten Verfahren wird die Ermittlung der wenigstens einen Fahrzeuggröße 46 solange wiederholt bis eine optimierte Verbrennungsgröße 70 und entsprechend wenigstens eine optimierte Fahrzeuggröße 46 erhalten wird.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Fahrzeug
- 10: Vorrichtung zum Ausführen wenigstens einer Fahrzeugfunktion
- 12: Datenübertragungseinrichtung
- 14: Speichereinrichtung
- 16: Erfassungseinrichtung
- 18: Antriebsstrang
- 30: Mischungsmodell
- 32: Trainiertes Abgasermittlungsmodell
- 34: Erste Speichereinrichtung
- 36: Zweite Speichereinrichtung
- 38: Erste Kraftstoffdaten
- 40: Zweite Kraftstoffdaten
- 42: Kraftstoffgemischdaten
- 44: Verbrennungsgröße
- 46: Fahrzeuggröße
- 50: Analysegröße
- 52: Anteilsgröße
- 54: Kraftstoffgröße
- 56: Fahrzeuggröße
- 58: Verbrennungsgröße
- 60: Trainingsdatensatz
- 62: Untrainiertes Abgasermittlungsmodell
- 70: Zugeordnete Verbrennungsgröße

## Patentansprüche

1. Verfahren zum Ausführen wenigstens einer Fahrzeugfunktion eines Fahrzeugs (1) in Abhängigkeit von einem zu verbrennenden Kraftstoffgemisch umfassend die Schritte:
- Ermitteln von Kraftstoffgemischdaten (42) in Bezug auf das zu verbrennende Kraftstoffgemisch, wobei die ermittelten Kraftstoffgemischdaten (42) für wenigstens eine Eigenschaft des zu verbrennenden Kraftstoffgemischs charakteristisch sind;
- Ermitteln wenigstens einer Fahrzeuggröße (46) zur Ausführung der wenigstens einen Fahrzeugfunktion auf Grundlage der ermittelten Kraftstoffgemischdaten (42) unter Verwendung eines trainierten Abgasermittlungsmodells maschinellen Lernens (32), wobei das trainierte Abgasermittlungsmodell maschinellen Lernens (32) unter Verwendung der ermittelten Kraftstoffgemischdaten (42) als Eingangsgröße wenigstens eine Verbrennungsgröße (44) als Ausgangsgröße erzeugt, wobei die Verbrennungsgröße charakteristisch für wenigstens eine Verbrennungseigenschaft des zu verbrennenden Kraftstoffgemisch ist;
- Ausführen der wenigstens einen Fahrzeugfunktion auf Grundlage der ermittelten Fahrzeuggröße (46).

2. Verfahren nach Anspruch 1,
**dadurch gekennzeichnet, dass**
das zu verbrennende Kraftstoffgemisch wenigstens einen ersten Kraftstoff und einen zweiten Kraftstoff umfasst, wobei es sich bevorzugt bei dem ersten Kraftstoff um einen im Tank des Fahrzeugs befindlichen Kraftstoff handelt und wobei es sich bevorzugt bei dem zweiten Kraftstoff um einen insbesondere zeitlich nachfolgenden getankten Kraftstoff handelt.

3. Verfahren nach Anspruch 2,
**dadurch gekennzeichnet, dass**
erste Kraftstoffdaten (38) und zweite Kraftstoffdaten (40) ermittelt werden, wobei die ersten Kraftstoffdaten (38) für wenigstens eine Eigenschaft des ersten Kraftstoffs charakteristisch sind und die zweiten Kraftstoffdaten (40) für wenigstens eine Eigenschaft des zweiten Kraftstoffs charakteristisch sind und die Ermittlung der Kraftstoffgemischdaten (42) auf Grundlage der ersten Kraftstoffdaten (38) und zweiten Kraftstoffdaten (40) erfolgt.

4. Verfahren nach Anspruch 3,
**dadurch gekennzeichnet, dass**
die ersten (38) und zweiten Kraftstoffdaten (40) jeweils wenigstens eine Analysegröße und eine der Analysegröße zugeordnete Anteilsgröße, bevorzugt eine Mengengröße/Volumengröße und besonders bevorzugt wenigstens eine Kraftstoffgröße umfassen.

5. Verfahren nach wenigstens einem der vorangegangenen Ansprüche,
**dadurch gekennzeichnet, dass**
die wenigstens eine Fahrzeuggröße (46) charakteristisch für wenigstens eine Einstellungsgröße des Antriebsstrangs (18) des Fahrzeugs (1) ist und bevorzugt charakteristisch für wenigstens eine Einstellungsgröße eines Kraftstoffsystems, eine Einstellungsgröße eines Luftpfads, eine Einstellungsgröße eines Zündsystems, eine Einstellungsgröße eines mechanischen Bestandteils (Mechanik), eine Einstellungsgröße eines Betriebsstoffs, eine Einstellungsgröße eines Abgaspfads und/oder für eine Betriebsart ist.

6. Verfahren nach Anspruch 3,
**dadurch gekennzeichnet, dass**
die ersten Kraftstoffdaten (38) von einer nichtflüchtigen Speichereinrichtung (34) des Fahrzeugs (1) abgerufen werden.

7. Verfahren nach Anspruch 3,
**dadurch gekennzeichnet, dass**
die zweiten Kraftstoffdaten (40) mittels einer Datenübertragungseinrichtung (12) des Fahrzeugs (1) empfangen werden, wobei bevorzugt die zweiten Kraftstoffdaten (40) von einer nichtflüchtigen, externen Speichereinrichtung (36), insbesondere von einem externen (Backend-)Server abgerufen werden.

8. Verfahren nach dem vorangegangenen Anspruch,
**dadurch gekennzeichnet, dass**
die zweiten Kraftstoffdaten (40) anhand wenigstens eines digitalen Zwillings ermittelt werden, wobei es sich bevorzugt bei dem digitalen Zwilling um ein insbesondere fälschungssicheres Zertifikat in Bezug auf einen Hersteller des zweiten Kraftstoffs handelt.

9. Computer-implementiertes Verfahren zur Erzeugung eines trainierten Abgasermittlungsmodells maschinellen Lernens (32) zur Ermittlung wenigstens einer Verbrennungsgröße (44) eines vorgegebenen Kraftstoffs unter Verwendung von Kraftstoffdaten, welche für eine Zusammensetzung des vorgegebenen Kraftstoffs charakteristisch sind, wobei die Kraftstoffdaten zu dem vorgegebenen Kraftstoff wenigstens eine Analysegröße und eine der Analysegröße zugeordnete Anteilsgröße umfassen, wobei die Analysegröße jeweils für eine Gruppe von Verbindungen aus dem vorgegebenen Kraftstoff charakteristisch ist, welche wenigstens eine vorgegebene Funktionalität aufweisen, und wobei die Anteilsgröße charakteristisch ist für einen Mengenanteil der in dem jeweiligen Kraftstoff befindlichen Verbindungen, welche in der durch die Analysegröße charakterisierte Gruppe gruppiert sind,
umfassend die Schritte
- Bereitstellen eines trainierbaren Abgasermittlungsmodells maschinellen Lernens (62), welches einen Satz trainierbarer Parameter umfasst und welches auf Grundlage von zu einem vorgegebenen Kraftstoff erfassten Kraftstoffdaten oder hiervon abgeleiteter Daten als Eingangsgröße wenigstens eine Verbrennungsgröße als Ausgangsgröße erzeugt, wobei die Verbrennungsgröße charakteristisch für wenigstens eine Verbrennungseigenschaft des Kraftstoffs ist;
- Erzeugen eines Trainingsdatensatzes (60) umfassend eine Vielzahl erfasster Kraftstoffdaten zu vorgegebenen Trainings-Kraftstoffen sowie eine Vielzahl von gemessenen Verbrennungsgrößen, wobei die Verbrennungsgrößen jeweils charakteristisch für wenigstens eine Verbrennungseigenschaft des jeweiligen Trainings-Kraftstoffs sind, sowie eine Vielzahl von Fahrzeuggrößen, wobei die Fahrzeuggrößen charakteristisch für wenigstens eine Einstellungsgröße eines Motors sind, welcher zur Verbrennung der Trainings-Kraftstoffe verwendet wird,
- Trainieren des Abgasermittlungsmodells maschinellen Lernens auf Grundlage des Trainingsdatensatzes.

10. Vorrichtung (10) zum Ausführen wenigstens einer Fahrzeugfunktion eines Fahrzeugs (1) in Abhängigkeit von einem zu verbrennenden Kraftstoffgemisch, wobei die Vorrichtung (10) dazu geeignet und bestimmt ist, Kraftstoffgemischdaten (42) in Bezug auf das zu verbrennende Kraftstoffgemisch zu ermitteln, wobei die ermittelten Kraftstoffgemischdaten (42) charakteristisch für wenigstens eine Eigenschaft des zu verbrennenden Kraftstoffgemischs sind,
**dadurch gekennzeichnet, dass**
die Vorrichtung (10) dazu geeignet und bestimmt ist, wenigstens eine Fahrzeuggröße (46) zum Ausführen der wenigstens einen Fahrzeugfunktion auf Grundlage der ermittelten Kraftstoffgemischdaten (42) unter Verwendung eines trainierten Abgasermittlungsmodells maschinellen Lernens (32) zu ermitteln, wobei das trainierte Abgasermittlungsmodell maschinellen Lernens (32) unter Verwendung der ermittelten Kraftstoffgemischdaten (42) als Eingangsgröße wenigstens eine Verbrennungsgröße (44) als Ausgangsgröße erzeugt, wobei die Verbrennungsgröße charakteristisch für wenigstens eine Verbrennungseigenschaft des zu verbrennenden Kraftstoffgemisch ist und die Vorrichtung (10) dazu geeignet und bestimmt ist, die wenigstens eine Fahrzeugfunktion auf Grundlage der ermittelten Fahrzeuggröße (46) auszuführen.

11. Vorrichtung zur Erzeugung eines trainierten Abgasermittlungsmodells maschinellen Lernens (32) zur Ermittlung wenigstens einer Verbrennungsgröße (44) eines vorgegebenen Kraftstoffs unter Verwendung von Kraftstoffdaten, welche für eine Zusammensetzung des vorgegebenen Kraftstoffs charakteristisch sind, wobei die Kraftstoffdaten zu dem vorgegebenen Kraftstoff wenigstens eine Analysegröße und eine der Analysegröße zugeordnete Anteilsgröße umfasst, wobei die Analysegröße jeweils für eine Gruppe von Verbindungen aus dem vorgegebenen Kraftstoff charakteristisch ist, welche wenigstens eine vorgegebene Funktionalität aufweisen, und wobei die Anteilsgröße charakteristisch ist für einen Mengenanteil der in dem jeweiligen Kraftstoff befindlichen Verbindungen, welche in der durch die Analysegröße charakterisierte Gruppe gruppiert sind, wobei die Vorrichtung dazu geeignet und bestimmt ist, ein trainierbares Abgasermittlungsmodell maschinellen Lernens (62) bereitzustellen, welches einen Satz trainierbarer Parameter umfasst und welches auf Grundlage von zu einem vorgegebenen Kraftstoff erfassten Kraftstoffdaten oder hiervon abgeleiteter Daten als Eingangsgröße wenigstens eine Verbrennungsgröße als Ausgangsgröße erzeugt, wobei die Verbrennungsgröße charakteristisch für wenigstens eine Verbrennungseigenschaft des Kraftstoffs ist, wobei die Vorrichtung dazu geeignet und bestimmt ist, einen Trainingsdatensatz (60) zu erzeugen umfassend eine Vielzahl erfasster Kraftstoffdaten zu vorgegebenen Trainings-Kraftstoffen sowie eine Vielzahl von Verbrennungsgrößen, wobei die Verbrennungsgrößen jeweils charakteristisch für wenigstens eine Verbrennungseigenschaft des jeweiligen Trainings-Kraftstoffs sind, sowie eine Vielzahl von Fahrzeuggrößen, wobei die Fahrzeuggrößen charakteristisch für wenigstens eine Einstellungsgröße eines Motors sind, welcher zur Verbrennung der Trainings-Kraftstoffe verwendet wird wobei die Vorrichtung dazu geeignet und bestimmt ist, das Abgasermittlungsmodell maschinellen Lernens (60) auf Grundlage des Trainingsdatensatzes zu trainieren.

12. Fahrzeug (1), insbesondere Kraftfahrzeug, umfassend eine Vorrichtung (10) gemäß Anspruch 10.
